# DEMANDE DE BREVET EUROPEEN

(11) **EP 2 479 862 A1**
(43) Date de publication de la demande: **25.07.2012**
(21) Numéro de dépôt: 11305073.6
(22) Date de dépôt: 25.01.2011
(51) Int. Cl.: H02J 3/00, H02J 3/28, G06Q 50/00

(54) **Gestion de l'alimentation en énergie d'un réseau local de transport d'énergie**

(71) Demandeur: Thomson Licensing, 92130 Issy-les-Moulineaux (FR)
(72) Inventeur: Massoulie, Laurent, 92130, Issy-les-Moulineaux (FR); Keshav, Srinivasan, Waterloo ON N2L3G1 (CA); Hegde, Nidhi, 92130, Issy-les-Moulineaux (FR); Salonidis, Theodoros, 92130, Issy-les-Moulineaux (FR)
(74) Mandataire: Ruellan-Lemonnier, Brigitte

(57) **Abrégé**

L'invention porte la gestion de l'alimentation en énergie d'un réseau local de transport d'énergie.

L'invention concerne en particulier un système de gestion de l'alimentation en énergie d' un dispositif client (DCL) connecté à un réseau local de transport d'énergie (DEN), le dispositif client (DCL) pouvant être alimenté en l'énergie au travers un dispositif de commutation (COM) connecté audit réseau (DEN), un opérateur (PSO) fournissant de l'énergie audit réseau (DEN) suivant une grille tarifaire (q_{T1}, ..., q_{Tj,} ..., q_{Tm}), indiquant un prix d'énergie en fonction de l'heure de la fourniture de l'énergie par rapport à un nombre m de périodes temporelles successives (T₁, ..., Tⱼ, ..., Tₘ) formant un cycle temporel où m est un nombre entier supérieur ou égal à 2, et où j est un nombre entier compris entre 1 et m.

Selon l'invention, ledit système comprend un moyen de stockage d'énergie (PSD) connecté audit réseau (DEN) au travers du dispositif de commutation (COM) pouvant être configuré suivant :
- Un premier mode (MOD) dans lequel le moyen de stockage d'énergie (PSD) fournit de l'énergie au dispositif client (DCL) ; ou
- Un deuxième mode (MOD) dans lequel l'opérateur (PSO) fournit de l'énergie simultanément au dispositif client (DCL) et au moyen de stockage d'énergie (PSD);
- Un troisième mode (MOD) dans lequel l'opérateur (PSO) fournit de l'énergie exclusivement au dispositif client (DCL);

Et il comporte en outre un dispositif de contrôle (GWY) configuré pour déterminer et assigner au dispositif (COM) un des modes de configuration (MOD) en fonction d'une comparaison entre un niveau instantané (SEL) d'énergie stockée dans le moyen de stockage (PSD) et un seuil local (QTL_{T1}, ..., QTL_{Tj}, ..., QTL_{Tm}) associé à chaque période temporelle (T₁, ..., Tⱼ, ..., Tₘ).

## Description

### Domaine de l'invention

L'invention porte sur la gestion de l'alimentation en énergie d'un réseau local de transport d'énergie. L'invention concerne plus précisément un procédé et un système de gestion de l'alimentation en énergie d'un tel réseau ainsi qu'un dispositif de contrôle dudit système.

### Etat de la technique

La question de la gestion de l'alimentation en énergie des réseaux électriques individuels est de plus en plus critique comme en témoigne les développements récents des compteurs intelligents ("smart grids" en anglais). Au niveau des réseaux électriques domestiques, on observe depuis quelques années un développement rapide des systèmes de fourniture d'énergie basés notamment sur l'emploi de panneaux électro-voltaïques couvrant les toits des habitations. Ces panneaux fournissent une énergie électrique renouvelable et bon marché lorsqu'ils sont illuminés par le soleil c'est-à-dire à un moment où le réseau domestique est peu consommateur d'énergie. En général, ces systèmes comprennent donc un moyen de stocker l'énergie autorisant un emploi différé de l'énergie notamment à des moments où le soleil est couché et où le besoin en énergie des habitations est supérieur. Par ailleurs, il est probable que dans quelques années, l'usage des véhicules électriques se sera développé et que les batteries de ces véhicules offriront une capacité de stockage d'énergie additionnelle substantielle une fois rangés à proximité desdits habitations.

Aujourd'hui, la gestion des ces moyens de stockage d'énergie est très rudimentaire : elle vise principalement à absorber le trop plein d'énergie produite pendant la journée des dispositifs individuels tels que les panneaux électro-voltaïques. Ce mode de gestion est adapté aux habitations auxquelles un opérateur fournit une énergie à un prix constant quelle que soit l'heure de la journée.

Cependant on observe une évolution des pratiques tarifaires des opérateurs fournissant de l'énergie aux particuliers. Ces opérateurs modulent le prix de l'énergie fournie en fonction de l'heure où l'énergie est fournie et donc consommée. Cette modulation est pour le moment très simple: ainsi en France, la grille tarifaire de l'Electricité de France (EDF) comporte un premier prix appelé « Heures creuses HC » et un second prix appelé « Heures pleines HP ». Le prix du kilowatt.heure en « Heures creuses » est moins élevé que prix du kilowatt.heure en « Heures pleines ». Les « Heures creuses » correspondent aux périodes de la journée où EDF a constaté que la demande globale en énergie électrique sur le territoire Français (consommations individuelles et industrielle) est moindre : par exemple de 22 heures à 6 heures du matin, et les « Heures pleines» sont placées de 6 heures à 22 heures. Cette grille tarifaire présente le double intérêt de permettre à EDF de réduire le recours à des sources d'énergie d'appoint (centrales électrique thermiques) pour pallier les pics de demande d'énergie en répartissant la demande d'énergie et de permettre aux consommateurs de réduire leur facture électrique s'ils mettent en marche leurs équipements électriques pendant plages horaire où l'énergie est moins chère comme par exemple pendant les « Heures creuse ».

En effet, les sources d'énergie d'appoint sont réputées être plus onéreuses et plus nocives pour l'environnement que les sources d'énergie classiques telle que les centrales nucléaires.

Des grilles tarifaires incitatives simples ont en particulier l'avantage d'être facilement prises en compte par les consommateurs qui peuvent choisir la nuit par exemple pour mettre en marche leurs équipements forts consommateurs d'énergie (machine à laver le linge, etc..).

Certains des équipements connectés aux réseaux électriques domestique comportent des dispositifs commandant leur mise en route pendant les périodes correspondant aux « heures creuse ». Toutefois il est clair que ce type d'incitation tarifaire contraint le consommateur individuel à choisir un horaire de consommation de l'énergie électrique. Cette contrainte peut être difficile à supporter en raison des nuisances que cette consommation décalée peut produire (par exemple le bruit produit par la rotation d'un tambour de machine à laver le linge) ou en raison de la nature des équipements dont l'horaire de mise en marche ne peut être décalé (chauffage électrique).

En outre, à l'avenir, pour inciter encore plus les particuliers à consommer l'énergie aux moments qu'ils auront choisis, il est probable que les opérateurs fournisseurs d'énergie vont affiner leurs grilles tarifaires et que celles-ci comporteront plus qu'une division de la journée en 2 périodes temporelles complémentaires. La tendance est donc à une évolution de la définition des grilles tarifaires avec une granularité temporelle fine (d'une à quelques heures) qui serait en outre susceptible d'évoluer à la fois au niveau de la définition des périodes temporelles et des prix pratiqués pendant ces périodes temporelles sur des horizons temporels plus ou moins long (de l'ordre du mois ou de l'année). Les systèmes de programmation décalée de la mise en marche des équipements ne sont pas adaptés à cette complexité croissante des grilles tarifaires de l'énergie.

L'objet de la présente invention est de réduire la facture de l'alimentation en énergie d'un réseau électrique domestique en tirant profit des nouveaux moyens de stockage d'énergie disponibles dans les foyers individuels tout en s'affranchissant de la complexité croissante des grilles tarifaires de l'énergie adaptées par les opérateur fournisseur d'énergie.

### Exposé de l'invention

On constate qu'il est plus intéressant sur un plan économique, de consommer l'énergie stockée préférentiellement lorsque l'énergie fournie par l'opérateur a un prix élevé et de charger en énergie le moyen de stockage PSD de préférence lorsque le prix de l'énergie fournie est bas. La présente invention propose une méthode et un système de gestion de l'alimentation en énergie automatiques et adaptatifs pour réduire la facture de l'énergie fournie fondé sur le constat ci-dessus.

Par « Automatique » on entend que la méthode et le système proposé ne requièrent pas une configuration manuelle (i.e. par un opérateur humain) par exemple pour fixer des seuils de prix en lien avec une grille tarifaire modifiée par l'opérateur fournisseur d'énergie. En particulier, l'invention s'adapte aux modifications tarifaires de l'opérateur fournisseur d'énergie au cours du temps.

« Adaptatifs» signifiant ici que la méthode et le système proposé évaluent la facture énergétique en continu dans le temps en fonction du niveau total d'énergie fournie (incluant le niveau d'énergie consommée directement par le dispositif client plus s'il existe le niveau d'énergie stocké dans le moyen de stockage) et de l'heure de la fourniture de ce niveau d'énergie.

L'idée à la base de l'invention est, connaissant la grille tarifaire d'un opérateur fournisseur d'énergie, de préférentiellement stocker l'énergie fournie par l'opérateur pendant les périodes temporelles où le tarif de l'énergie est bon marché et de préférentiellement consommer l'énergie stockée dans le moyen de stockage d'énergie pendant les périodes où le tarif de l'énergie fourni par l'opérateur est plus élevé.

A cet effet, l'invention a pour objet, selon un premier aspect, un système de gestion de l'alimentation en énergie d'un dispositif client DCL connecté à un réseau local de transport d'énergie DEN, le dispositif client DCL pouvant être alimenté en l'énergie au travers un dispositif de commutation COM connecté audit réseau DEN, un opérateur PSO fournissant de l'énergie audit réseau DEN suivant une grille tarifaire q_{T1}, ..., q_{Tj,} ..., q_{Tm}, indiquant un prix d'énergie en fonction de l'heure de la fourniture de l'énergie par rapport à un nombre m de périodes temporelles successives T₁, ..., Tⱼ, ..., Tₘ formant un cycle temporel où m est un nombre entier supérieur ou égal à 2, et où j est un nombre entier compris entre 1 et m.

Selon un mode de réalisation de l'invention, ledit système comprend un moyen de stockage d'énergie PSD connecté audit réseau DEN au travers du dispositif de commutation COM pouvant être configuré suivant :
- Un premier mode MOD dans lequel le moyen de stockage d'énergie PSD fournit de l'énergie au dispositif client DCL: ou
- Un deuxième mode MOD dans lequel l'opérateur PSO fournit de l'énergie simultanément au dispositif client DCL et au moyen de stockage d'énergie PSD:
- Un troisième mode MOD dans lequel l'opérateur PSO fournit de l'énergie exclusivement au dispositif client DCL;

Ledit système comporte en outre un dispositif de contrôle GWY configuré pour déterminer et assigner au dispositif COM un des modes de configuration MOD en fonction d'une comparaison entre un niveau instantané SEL d'énergie stockée dans le moyen de stockage PSD et un seuil local QTL_{T1}, ..., QTL_{Tj}, ..., QTL_{Tm}, associé à chaque période temporelle T₁, ..., Tⱼ,.., Tₘ.

Avantageusement, le seuil local QTL_{T1}, ..., QTL_{Tj}, ..., QTL_{Tm} est déterminé à partir d'une comparaison entre le niveau instantané SEL_{INIT} d'énergie stockée dans le moyen de stockage PSD au démarrage d'une période temporelle T₁, ..., Tⱼ, ..., Tₘ et un premier et un deuxième seuil courant QLTL_{T1}, ..., QLTL_{Tj} QLTL_{Tm}, QHTL_{T1}, ..., QHTL_{Tj}, ..., QHTL_{Tm} de charge du moyen de stockage PSD associé à chaque période temporelle T₁, ..., Tⱼ, ..., Tₘ.

Avantageusement, le dispositif de commutation COM délivre au dispositif de contrôle GWY à l'issue de chaque période temporelle T_{1,} ..., Tⱼ, ..., Tₘ un premier niveau PRL_{T1}, ..., PRL_{Tj}, ..., PRL_{Tm} d'énergie fournie par l'opérateur PSO au dispositif client DCL et un second niveau PLL_{T1}, ..., PLL_{Tj}, ..., PLL_{Tm} d'énergie fournie par l'opérateur PSO au moyen de stockage d'énergie PSD pendant ladite période temporelle T₁,..., Tⱼ, ..., Tₘ.

Avantageusement, le dispositif de contrôle GWY est adapté pour déterminer un premier vecteur V1 de n éléments p₁ ..., pᵢ, ..., pₙ qui correspondent aux prix d'énergie de la grille tarifaire q_{T1}, ..., q_{Tj}, ..., q_{Tm} classés suivant un ordre croissant, et deux seconds vecteurs V2L, V2H de n éléments LTL₁, ..., LTLᵢ, ..., LTLₙ, HTL₁, ..., HTLᵢ, ..., HTLₙ qui sont des seuils de charge du moyen de stockage PSD associés aux prix p₁, ..., pᵢ...., pₙ, où i est un nombre entier compris entre 1 et n et le dispositif GWY est en outre adapté pour déterminer le premier et le deuxième seuil courant QLTL_{T1,} ..., QLTL_{Tj,} ..., QLTL_{Tm}, QHTL_{T1}, ..., QHTL_{Tj}, ..., QHTL_{Tm} à partir d'une association du premier et des seconds vecteurs V1, V2L, V2H et de ladite grille tarifaire q_{T1}, ..., q_{Tj}, ..., q_{Tm}.

Avantageusement, le dispositif de contrôle GWY met à jour, à l'issue de chaque cycle temporel, la valeur des éléments LTL₁, ..., LTLⱼ, ..., LTLₙ, HTL₁, ..., HTLᵢ ..., HTLₙ des deux seconds vecteurs V2L, V2H à partir d'un résultat de comparaison entre un coût réel SCR1 de la fourniture par l'opérateur PSO d'un niveau total SP_{T1}, ..., SP_{Tj}, ..., SP_{Tm} d'énergie et 2n coûts fictifs SCLF₁, ..., SCLFᵢ, ..., SCLFₙ, SCHF₁, ..., SCHFᵢ, ..., SCHFₙ, où le niveau total SP_{T1}, ..., SP_{Tj}, ..., SP_{Tm} est égal à la somme du premier niveau PRL_{T1}, ..., PRL_{Tj}, ..., PRL_{Tm} d'énergie et du second niveau PLL_{T1}, ..., PLL_{Tj}, ..., PLL_{Tm} d'énergie pendant ladite période temporelle T₁, ..., Tⱼ, ..., Tₘ et où les coûts fictifs SCLF₁, ..., SCLFᵢ, ..., SCLFₙ, SCHF₁, ..., SCHF_{i,} ..., SCHFₙ résultent de 2n simulations réalisées par le dispositif GWY du coût d'une fourniture d'énergie par l'opérateur PSO audit système, en considérant un niveau d'énergie fournie par l'opérateur PSO au dispositif client DCL pendant lesdites périodes temporelles T₁, ..., Tⱼ, ..., Tₘ égal au premier niveau PRL_{T1}, ..., PRL_{Tj}, ..., PRL_{Tm} d'énergie et en considérant successivement 2n associations V1, V2LF2ᵢ, V2LF2ᵢ, V1, V2HF2ᵢ, V2HF2, composées du premier vecteur V1 et d'un second vecteur fictif VLF2_{i,} VHF2ᵢ où le second vecteur fictif VLF2₁ comporte n éléments LTL₁, ..., LTLᵢ+δ, ..., LTLₙ et le second vecteur fictif VLF2ᵢ comporte n éléments HTL₁, ..., HTLᵢ+δ, ..., HTLₙ, où δ est un nombre entier positif stocké dans le dispositif GWY.

Avantageusement, lorsque le dispositif client DCL requiert de l'énergie, le dispositif de contrôle GWY détermine et assigne au dispositif de commutation COM:
- le premier mode MOD lorsque le niveau instantané SEL d'énergie est strictement supérieur au seuil local GTL_{T1,} ..., QTL_{Tj}, ..., QTL_{Tm};
- le deuxième mode MOD lorsque le niveau instantané SEL d'énergie est strictement inférieur au seuil local QTL_{T1}, ..., QTL_{Tj}, ..., QTL_{Tm};
- le troisième mode MOD lorsque le niveau instantané SEL d'énergie est égal au seuil local QTL_{T1}, ..., QTLTj, ..., QTL_{Tm}.

Avantageusement, le dispositif de commutation COM peut, en outre, être configuré suivant :
- Un quatrième mode MOD dans lequel l'opérateur PSO fournit de l'énergie uniquement au moyen de stockage d'énergie PSD;
- Un cinquième mode MOD dans lequel l'opérateur PSO ne fournit pas d'énergie au système ;

Et lorsque le dispositif client DCL ne requiert pas l'énergie, le dispositif de contrôle GWY détermine et assigne au dispositif COM :
- le quatrième mode MOD tant que le niveau instantané SEL d'énergie est strictement inférieur au seuil local QTL_{T1}, ..., QTL_{Tj}, ..., QTL_{Tm};
- le cinquième mode MOD si le niveau instantané SEL d'énergie est supérieur ou égal au seuil local QTL_{T1}, ..., QTL_{Tj}, ..., QTL_{Tm}.

L'invention a pour objet, selon un second aspect, un dispositif pour un système de gestion de l'alimentation en énergie d'un dispositif client DCL connecté à un réseau local de transport d'énergie DEN, le dispositif client DCL pouvant être alimenté en l'énergie au travers un dispositif de commutation COM connecté audit réseau DEN, un opérateur PSO fournissant de l'énergie audit réseau DEN suivant une grille tarifaire q_{T1}, ..., q_{Tj}, ..., q_{Tm}, indiquant un prix d'énergie en fonction de l'heure de la fourniture de l'énergie par rapport à un nombre m de périodes temporelles successives T₁, ..., Tⱼ, ..., Tₘ formant un cycle temporel C1, C2 où m est un nombre entier supérieur ou égal à 2, et où j est un nombre entier compris entre 1 et m.

Selon un mode de réalisation de l'invention, ledit dispositif de contrôle GWY comporte:
- un moyen M1 pour recevoir du dispositif de commutation COM à l'issue de chaque période temporelle T₁, ..., Tⱼ, ..., Tₘ un premier niveau PRL_{T1}, ..., PRL_{Tj}, ..., PRL_{Tm} d'énergie fournie par l'opérateur PSO au dispositif client DCL et un second niveau PLL_{T1}, ..., PLL_{Tj}, ..., PLL_{Tm} d'énergie fournie par l'opérateur PSO au moyen de stockage d'énergie PSD pendant ladite période temporelle T₁, ..., Tⱼ, ..., Tₘ;
- un moyen M2 qui comporte une association d'un premier vecteur V1 de n éléments p₁, ..., pᵢ, ..., pₙ correspondant aux prix d'énergie de la grille tarifaire q_{T1}, ..., q_{Tj}, ..., q_{Tm} classés suivant un ordre croissant et de deux seconds vecteurs V2L, V2H comportant chacun n éléments LTL_{1,} ..., LTLᵢ, ..., LTLₙ, HTL₁, ..., HTLⱼ, ..., HTLₙ qui sont des seuils de charge du moyen de stockage PSD associés aux prix p₁, ..., pᵢ, ..., pₙ, où i est un nombre entier compris entre 1 et n, ledit moyen M2 est en outre configuré pour déterminer un premier et un deuxième seuil courant QLTL_{T1}, ..., QLTL_{Tj}, ..., QLTL_{Tm}, QHTL_{T1}, ..., QHTL_{Tj}, ..., QHTL_{Tm} de charge à partir de ladite association V1, V2L, V2H et de ladite grille tarifaire q_{T1}, ..., q_{Tj}, ..., q_{Tm}, ledit moyen M2 est en outre adapté pour déterminer un seuil local QTL_{T1}, ..., GTL_{Tj}, ..., QTL_{Tm}, à partir d'une comparaison entre le niveau instantané SEL_{INIT} d'énergie stockée dans le moyen de stockage PSD au démarrage d'une période temporelle T₁, ..., Tⱼ, ..., Tₘ et lesdits premier et deuxième seuil courant QLTL_{T1}, ..., QLTL_{Tj}, ..., QLTL_{Tm}, QHTL_{T1}, ..., QHTL_{Tj}, ..., QHTL_{Tm} associé à ladite période temporelle T₁, ..., T_{j,} ..., Tₘ;
- un moyen M3 pour déterminer et assigner en temps réel un mode de configuration MOD au dispositif de commutation COM sur la base d'une comparaison entre :
   ○ le niveau instantané SEL que ledit moyen M3 reçoit en temps réel dudit moyen de stockage PSD ; et
   ○ la valeur du seuil local QTL_{T1}, ..., QTL_{Tj}, ..., QTL_{Tm} associé à ladite période temporelle T₁, ..., Tⱼ, ..., Tₘ.

L'invention a pour objet, selon un troisième aspect, un procédé de gestion de l'alimentation en énergie d'au moins un dispositif client DCL connecté à un réseau local de transport d'énergie DEN, le dispositif DCL pouvant requérir de l'énergie au travers un dispositif de commutation COM connecté audit réseau DEN, un opérateur PSO fournissant de l'énergie audit réseau DEN au travers dudit dispositif COM suivant une grille tarifaire q_{T1}, ..., q_{Tj}, ..., q_{Tm}, ladite grille tarifaire q_{T1}, ..., q_{Tj}, ..., q_{Tm} indiquant un prix d'énergie en fonction de l'heure de la fourniture de l'énergie par rapport à un nombre m de périodes temporelles successives T₁, ..., Tⱼ, ..., Tₘ formant un cycle temporel C1, C2 où m est un nombre entier supérieur ou égal à 2, et où j est un nombre entier compris entre 1 et m, un moyen de stockage d'énergie PSD étant connectés audit réseau DEN au travers du dispositif COM configuré suivant un premier mode MOD dans lequel le moyen PSD fournit de l'énergie au dispositif DCL ou un deuxième mode MOD dans lequel l'opérateur PSO fournit de l'énergie simultanément au dispositif DCL et au moyen PSD, ou un troisième mode MOD dans lequel l'opérateur PSO fournit de l'énergie exclusivement au dispositif DCL.

Selon un mode de réalisation de l'invention, au niveau du dispositif de contrôle GWY, il comporte les étapes consistant à :
- S1 recevoir ladite grille tarifaire q_{T1}, ..., q_{Tj,} ..., q_{Tm} ;
- en permanence et en temps réel, recevoir du moyen de stockage d'énergie PSD un niveau instantané SEL d'énergie stockée dans ledit moyen PSD;
- S2.1 évaluer un nombre n d'éléments p₁, ..., pᵢ, ..., pₙ d'un premier vecteur V1 à partir de ladite grille tarifaire q_{T1}, ..., q_{Tj}, ..., q_{Tm} et au démarrage de chaque cycle temporel déterminer n éléments LTL₁, ..., LTL₁, ..., LTLₙ, HTL₁, ..., HTL₁, ..., HTLₙ de deux seconds vecteurs V2L, V2H associés aux n éléments p₁, ..., _{Pi}, ..., pₙ du premier vecteur V1;- S2.2 déterminer un premier et un deuxième seuil courant QLTL_{Tj}, QHTL_{Tj}, de charge pour ladite période courante Tⱼ à partir de la grille tarifaire q_{T1}, ..., q_{Tj}, ..., q_{Tm} et de l'association V1, V2L, V2H
- à chaque période temporelle Tⱼ :
   - S3.1 Déterminer un niveau instantané SEL_{INIT.Tj} d'énergie au démarrage de la période temporelle Tⱼ ;
   - S3.2 déterminer un seuil local QTL_{T1}, ..., QTL_{Tj}, ..., QTL_{Tm} à partir d'une comparaison entre le niveau instantané SEL_{INIT} d'énergie stockée dans le moyen de stockage PSD au démarrage de la période temporelle T₁, ..., Tⱼ, ..., Tₘ et le premier et deuxième seuil courant QLTL_{T1}, ..., QLTL_{Tj}, ..., QLTL_{Tm}, QHTL_{T1,} ..., QHTL_{Tj}, ..., QHTL_{Tm} de charge associé à chaque période temporelle T₁, ..., Tⱼ, ..., Tₘ ;
- S3.3 en permanence et en temps réel, déterminer et assigner un mode de configuration MOD au dispositif de commutation COM de telle sorte que le niveau instantané SEL rallie le seuil local QTL_{T1}, ..., QTL_{Tj}, ..., QTL_{Tm}.

Avantageusement, il comporte en outre, au niveau du dispositif de contrôle GWY, les étapes suivantes visant à :
- S4 évaluer le coût réel SCR1 de la fourniture d'énergie par l'opérateur PSO pendant ledit cycle temporel couvrant lesdites périodes temporelles T₁, ..., Tⱼ, ..., Tₘ ;
- S5 évaluer 2n coûts fictifs SCR1 de la fourniture d'énergie par l'opérateur PSO pendant ledit cycle temporel couvrant lesdites périodes temporelles T₁, ..., Tⱼ..., Tₘ à partir d'une évaluation de deux jeux de n seconds coûts CLF_{T1,1}, ..., CLF_{T1,1}, ...., CLF_{T1,n}, ..., CLF_{Tj,1}, ..., CLF_{Tj,i}, ..., CLF_{Tj,n}, ... CLF_{Tm,1}, ..., CLF_{Tm,i}, ..., CLF_{Tm,n}, CHF_{T1,i}, ..., CHF_{T1,i}, ..., CHF_{T1,n}, ..., CHF_{Tj,1}, ..., CHFT_{j,i}, ..., CHF_{Tj,n}, ..., CHF_{Tm,1}, ..., CHF_{Tm,i}, ..., CHF_{Tm,n} de la fourniture d'énergie par l'opérateur PSO au moyen de stockage d'énergie PSD pendant ladite période temporelle T₁, ..., Tⱼ, ..., Tₘ en considérant un niveau d'énergie fournie par l'opérateur PSO au dispositif client DCL pendant lesdites périodes temporelles T₁, ..., Tⱼ, ..., Tₘ égal au premier niveau PRL_{T1}, ..., PRL_{Tj}, ..., PRL_{Tm} d'énergie, en considérant successivement 2n associations V1, V2LF2ᵢ, V2LF2ᵢ, V1, V2HF2ᵢ, V2HF2ᵢ composées du premier vecteur V1 et d'un second vecteur fictif VLF2ᵢ, VHF2ᵢ où le second vecteur fictif VLF2, comporte n éléments LTL₁, ..., LTLᵢ+δ, ..., LTLₙ et le second vecteur fictif VLF2ᵢ comporte n éléments HTL₁, ..., HTLᵢ+δ, ..., HTLₙ, où δ est un nombre entier positif stocké dans le dispositif de contrôle GWY.
- S6 comparer à l'issue du cycle temporel la valeur du coût réel SCR1 et la valeur de chacun des coûts fictifs SCLF₁, ..., SCLF₁, ..., SCLFₙ, SCHF₁, ..., SCHFᵢ, ...,SCHFₙ;
- S2.1 mettre à jour la valeur des éléments LTL₁, ..., LTLᵢ, ..., LTLₙ, HTL₁, ..., HTLᵢ, ..., HTLₙ des seconds vecteurs V2L, V2H stockés dans le moyen de contrôle GWY en fonction des résultats RESL₁, ..., RESL_{1,} ..., RESLₙ, RESH₁, ..., RESH₁, ..., RESHₙ desdites comparaisons.

### Brève description des dessins

L'invention sera mieux comprise à la lecture de la description détaillée qui va suivre d'un exemple de réalisation de l'invention. Cette description est donnée uniquement à titre d'exemple et se réfère aux dessins annexés sur desquels -
La figure 1 représente un système de gestion de l'alimentation électrique d'un réseau local de transport d'énergie selon un mode de réalisation de l'invention ;
Les figures 2a, 2b, 2c, 2d, 2e représentent les flux d'énergie dans ledit système de gestion lorsque le dispositif de commutation COM qu'il comporte est configuré respectivement suivant un premier, un deuxième, un troisième et un quatrième mode;
La figure 3 représente l'évolution temporelle sur une durée d'un cycle temporel C1 du niveau instantané SEL d'énergie stockée dans le moyen de stockage d'énergie PSD du système selon le mode de réalisation de l'invention;
La figure 4 représente l'évolution temporelle des seuils de charges courants QTL_{T1}, QTL-_{T2}, QTL_{T3}, QTL_{T4}, QTL_{T1'}, QTL_{T2'}, QTL_{T3'}, QTL_{T4'}, sur une durée correspondant à deux cycles temporels successifs C1, C2 ;
La figure 5 représente schématiquement un exemple d'architecture d'un dispositif de contrôle GWY selon un mode de réalisation de l'invention ;
La figure 6a illustre la valeur de seuil local QTL_{T1} de charge déterminée par le dispositif GWY pour un mode de réalisation de l'invention particulier où un unique seuil TL_{T1} est associé au prix q_{T1} de l'énergie fournie pendant la période temporelle T₁ ;

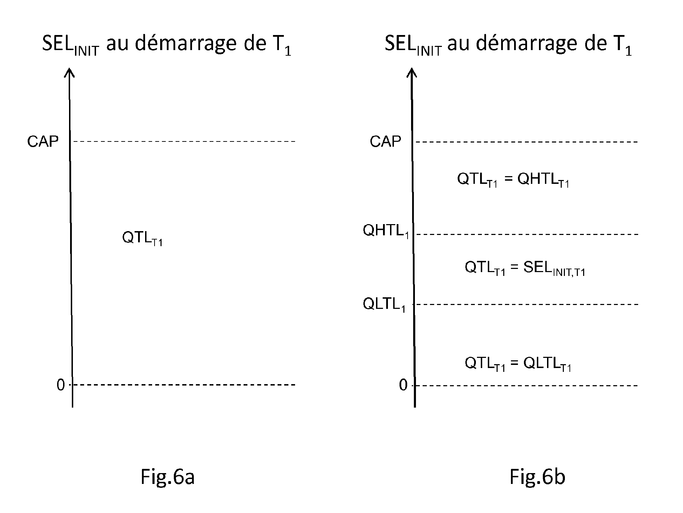

En complément, la figure 6b représente les valeurs de seuil local QTL_{T1} de charge déterminées par le dispositif GWY en fonction du niveau instantané SEL_{INIT,T1} d'énergie stockée dans le moyen de stockage PSD au démarrage de la période temporelle T₁ pour un mode de réalisation de l'invention où deux seuils LTL_{T1}, HTL_{T1} sont associés au prix q_{T1} de l'énergie fournie pendant la période temporelle T₁.

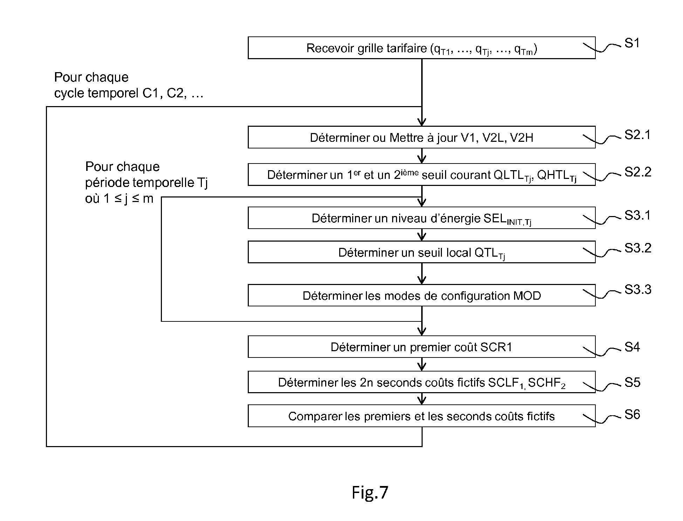

La figure 7 représente un ordinogramme d'un procédé selon le mode de réalisation de l'invention où deux seuils LTL_{T1}, HTL_{T1} sont associés au prix q_{T1} de l'énergie fournie pendant la période temporelle T₁.

### Description détaillée des modes de réalisation préférés

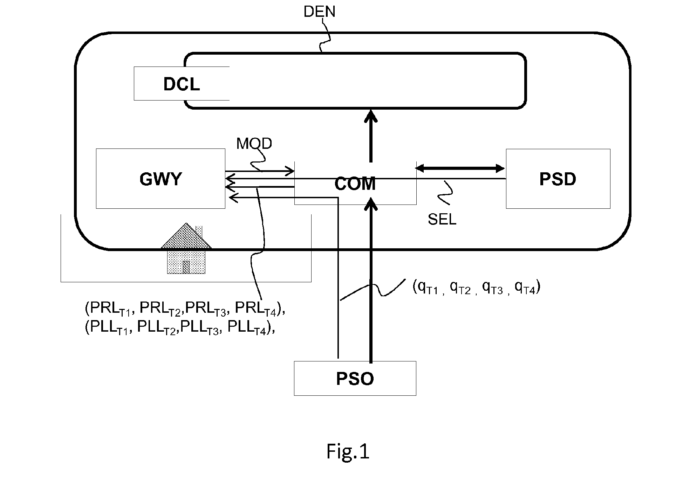

La figure 1 représente un réseau local de transport d'énergie DEN comprenant au moins un dispositif client DCL configuré pour consommer l'énergie véhiculée sur ledit réseau DEN.

Par « réseau local de transport d'énergie», on entend un réseau de transport d'énergie dans lequel l'accès de l'énergie est centralisé sur un noeud particulier où peut être placé un dispositif de commutation COM. Ce dispositif de commutation COM est configuré pour commander l'alimentation en énergie de l'ensemble du réseau local DEN.

Par exemple, placé dans un mode de configuration, le dispositif de commutation COM peut autoriser une source externe au réseau à alimenter un dispositif client DCL connecté au réseau DEN. Placé dans un autre mode de configuration, le dispositif de commutation COM peut aussi bloquer l'alimentation en énergie du réseau DEN par la même source du réseau DEN.

Le réseau DEN équipe par exemple une unité d'habitation individuelle: on parle alors de réseau domestique. Toutefois, les réseaux locaux, de transport d'énergie DEN ne se limitent pas aux seuls réseaux domestiques et peuvent aussi bien équiper des unités de production industrielle: par exemple un bâtiment comportant un équipement à vocation industrielle fonctionnant à partir d'énergie fournie par une source d'énergie externe au réseau DEN.

Dans la description qui suit, le réseau DEN est un réseau local de transport d'électricité. Mais il va sans dire que le mode de réalisation de l'invention ne se limite pas à la gestion de l'alimentation en électricité de réseaux locaux de transport d'électricité.

Revenons à la figure les éléments composant la figure 1 : un moyen de stockage d'énergie PSD est connecté au réseau DEN via le dispositif COM. Ainsi, le dispositif client DCL qui est connecté au réseau électrique DEN peut être alimenté en énergie électrique soit par de l'électricité stockée dans le moyen de stockage d'énergie PSD soit par de l'électricité directement fournie par un opérateur fournisseur d'énergie PSO : par exemple de l'électricité issue d'une source d'énergie électrique externe au réseau DEN. L'origine de l'électricité consommée par le dispositif DCL est définie par le mode de configuration du dispositif COM.

Le moyen de stockage PSD est préférentiellement un moyen fixe lié à l'unité d'habitation. Mais il peut également comporter des parties mobiles comme par exemple une batterie électrique d'un véhicule automobile offrant une capacité de stockage d'énergie uniquement lorsque le véhicule est rangé à proximité de l'habitation et que la batterie du véhicule est connectée au réseau local via le dispositif COM.

Dans la suite de la description, on fera l'hypothèse que l'opérateur PSO est le seul fournisseur d'électricité du réseau et qu'il fournit de l'électricité en provenance d'une unique source externe au réseau DEN. L'énergie produite par ladite source est véhiculée jusqu'au réseau par l'opérateur PSO. L'énergie stockée dans le moyen de stockage PSD peut être également fournie préalablement par l'opérateur PSO et provient également de ladite source EPS. La source d'énergie est par exemple une centrale électrique à énergie nucléaire, il va sans dire que l'énergie fournie par l'opérateur PSO peut être produite par plusieurs sources simultanément.

Dans ce qui suit, on considérera que l'opérateur PSO a une capacité infinie à fournir de l'énergie électrique : c'est-à-dire que l'opérateur PSO peut sans limitation arriver à fournir autant d'énergie que le (ou les) dispositif(s) client(s) DCL du réseau DEN en requière(nt) et, si besoin, simultanément charger en énergie également le moyen de stockage d'énergie PSD.

Quant à lui, le moyen de stockage PSD possède une capacité de stockage CAP finie et déterminée. Autrement dit, le moyen de stockage PSD peut continuer à stocker de l'énergie jusqu'à ce que le niveau instantané SEL d'énergie qu'il contient n'excède pas CAP. Par ailleurs le moyen de stockage PSD constitue une source d'énergie pour alimenter le réseau DEN tant que le niveau instantané SEL d'énergie qu'il contient est supérieur à 0.

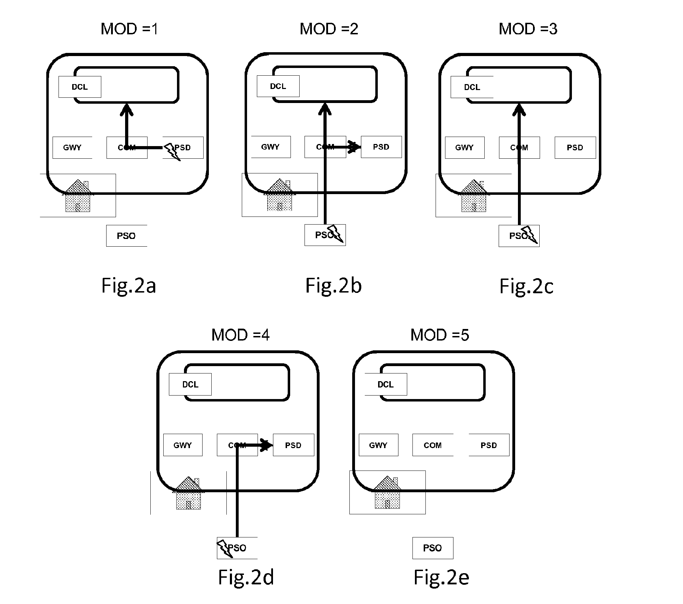

La source d'énergie et le moyen de stockage PSD sont tous deux connectés au réseau DEN au travers le dispositif de commutation COM qui peut être configuré suivant :
Un premier mode, représenté schématiquement sur la figure 2a, dans lequel le moyen de stockage d'énergie PSD alimente seul le dispositif client DCL avec l'énergie qu"il contient au travers du dispositif de commutation COM ; ou
Un second mode, représenté schématiquement sur la figure 2b, dans lequel l'opérateur PSO fournit de l'énergie au dispositif client DCL et charge simultanément en énergie (c'est-à-dire alimente en énergie) le moyen de stockage PSD au travers du dispositif de commutation COM ; ou
Un troisième mode, représenté schématiquement sur la figure 2c, dans lequel l'opérateur PSO fournit de l'énergie exclusivement au dispositif client DCL ; ou
Un quatrième mode, représenté schématiquement sur la figure 2d, dans lequel, seul le moyen de stockage d'énergie PSD est chargé en énergie par la source extérieure au travers du dispositif de commutation COM ; ou

Un cinquième mode, représenté schématiquement sur la figure 2e, dans lequel, le dispositif client DCL n'est pas alimenté en énergie et le moyen de stockage d'énergie PSD n'est pas chargé en énergie par la source EPS.

Sur la figure 1, les flèches en trait fin représentent les flux d'information, sur les figures 2a, 2b, et 2c, les flèches en trait épais représentent un flux d'énergie.

Sur les figures 2a, 2b, 2c, un éclair représente la source d'énergie alimentant le dispositif client DCL.

Un dispositif de contrôle GWY détermine le mode de configuration parmi le premier, le deuxième, le troisième, le quatrième ou le cinquième mode à partir d'une information sur le niveau de charge courant SEL du moyen de stockage PSD (qui pourra être aussi décrite plus loin comme la valeur du niveau instantané SEL d'énergie stockée dans le moyen de stockage PSD) et d'une information de seuil de charge local qui correspond à un objectif de charge du moyen de stockage PSD. Le dispositif de contrôle GWY assigne au dispositif de commutation COM le mode de configuration qu'il détermine. Cette détermination et cette assignation sont réalisées en temps réel, c'est-à-dire au rythme où le dispositif GWY reçoit l'information sur le niveau de charge courant SEL du moyen de stockage PSD.

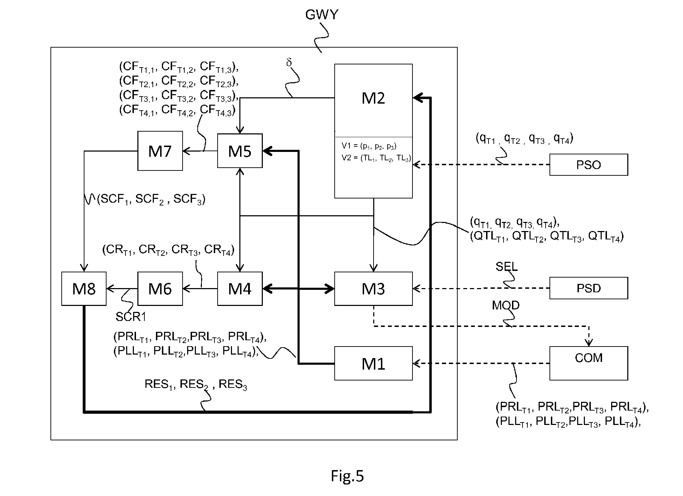

Plus précisément, comme représenté sur la figure 5, le dispositif de contrôle GWY comporte un moyen M3 qui détermine le mode de configuration MOD du dispositif de commutation COM de manière à ce que le niveau instantané SEL de l'énergie stockée dans le moyen de stockage soit supérieur ou égal à un seuil local de charge qui correspond à un niveau d'énergie stockée dans le moyen de stockage qui est un niveau cible. On précisera plus loin dans la description, la façon dont les modes de configuration du dispositif COM sont déterminés par le dispositif de contrôle GWY.

Un des aspects particuliers de l'invention est que le seuil local de charge du moyen de stockage d'énergie PSD n'est pas constant dans le temps et prend une valeur qui est liée au prix de l'énergie susceptible d'être fournie par l'opérateur PSO à cet instant.

Dans la suite du document on décrit dans une première partie un premier mode de réalisation de l'invention dans lequel à chaque prix d'énergie fournie par l'opérateur PSO est associé un unique seuil.

En s'appuyant sur cette première description, on présentera ensuite un second mode de réalisation pour lequel deux seuils sont associés à chaque prix d'énergie fournie par l'opérateur PSO.

Le premier mode de réalisation décrit est bien évidemment un cas particulier du second mode de réalisation et correspond à une situation où les deux seuils ont des valeurs égales. Il apparait plus simple d'expliquer dans le détail du premier mode de réalisation avant de débuter celle du second mode de réalisation. Ceci est d'autant plus justifié qu'il est à noter que le l'étape de calcul de coût fictifs du deuxième mode de réalisation de l'invention est identique à l'étape similaire du premier mode de réalisation comme ce sera montré plus loin.

Dans la suite, on va considérer un opérateur PSO fournisseur d'énergie qui facture la fourniture d'énergie suivant une grille tarifaire qui décompose le temps en cycles temporels C1, C2 périodiques, successifs et de préférence identiques. Un cycle temporel C1, C2 est divisé en un nombre m de périodes temporelles successives T₁, .., Tⱼ, ...,Tₘ pendant lesquelles l'énergie que fournit l'opérateur PSO fournit est facturé au prix q_{T1}, ..., q_{Tj}, ..., q_{Tm}.

Pour illustrer simplement l'invention, on considère des cycles temporels C1, C2 dont la durée correspond à 24 heures. Le cycle temporel C1 est divisé en un nombre m = 4 de périodes temporelles successives T₁, T₂, T₃, T₄ pendant lesquelles le prix de l'énergie fournie par l'opérateur PSO est fixe et égal respectivement à q_{T1}, q_{T2}, q_{T3}, q_{T4}.

Q_{T1}, q_{T2}, q_{T3}, q_{T4} constitue une grille tarifaire de l'opérateur qui indique le prix auquel est facturée l'énergie fournie pendant les périodes temporelles T₁, T₂, T₃, T₄. Cette grille tarifaire s'applique à tous les cycles temporels successifs. Ainsi, la variation du montant facturé d'un cycle temporel à l'autre est uniquement fonction du niveau d'énergie fournie par l'opérateur PSO et de la période temporelle pendant T₁, T₂, T₃, T₄ laquelle cette fourniture a lieu.

Toujours dans l'objectif de décrire simplement le mode de réalisation de l'invention, on considère que les 4 périodes temporelles T₁, T₂, T₃, T₄ ont chacune une égale durée de 6 heures pendant laquelle le prix de l'énergie facturé est égal à (q_{T1}, q_{T2}, q_{T3}, q_{T4}) = (1, 10, 50, 10).

Il va sans dire que la méthode et le système proposé peuvent opérer avec une durée de cycle différente des 24 heures et un nombre m de périodes également différent de 4 pourvu qu'il soit supérieur à 2. La durée des périodes temporelles n'a pas d'effet

En outre si la méthode selon l'invention permet de réduire la facture énergétique d'autant plus significativement que la grille tarifaire reste inchangée sur plusieurs cycles temporels successifs. Elle permet de s'adapter également aux modifications de la grille tarifaire par l'opérateur PSO, comme ce sera expliqué plus loin.

Au démarrage d'un premier cycle temporel C1, et des la réception par le dispositif de contrôle GWY de la grille tarifaire q_{T1}, q_{T2}, q_{T3}, q_{T4,} un premier vecteur V1 est constitué. Le premier vecteur V1 comporte n éléments p₁, ..., pᵢ, ..., pₙ qui correspondent aux prix d'énergie figurant dans la grille tarifaire. Les éléments pᵢ sont classés par ordre croissant. Il est fait l'hypothèse que n est un nombre entier supérieur ou égal à 2, c'est-à-dire que la grille tarifaire comprend au moins deux prix différents, n est naturellement un nombre inférieur ou égal à m car un prix peut être employé pour deux périodes temporelles différentes et pour i compris entre 1 et n-1, on a pᵢ inférieur à pᵢ₊₁.

Le premier vecteur V1 est stocké dans un moyen M2 du dispositif de contrôle GWY représenté sur la figure 5.

Dans notre exemple, n = 3 car on compte 3 prix différents dans la grille tarifaire q_{T1}, q_{T2}, q_{T3}, q_{T4} et, le premier vecteur V1 vaut (1, 10, 50).

Tant que la grille tarifaire n'est pas modifiée (par exemple par une modification d'un des prix q_{T1} figurant dans la grille tarifaire q_{T1}, q_{T2}, q_{T3}, q_{T4}, par une suppression ou un ajout d'une période temporelle qu'elle comporte), la valeur des éléments du premier vecteur V1 n'est pas modifiée.

Description propre au premier mode de réalisation de l'invention dans lequel un unique seuil de charge TLᵢ est associé à un prix pᵢ de l'énergie fournie par l'opérateur PSO.

On se place dans une situation où deux seconds vecteurs V2L et V2L présentés dans une seconde partie du présent document sont égaux : un unique second vecteur noté V2 sera considéré dans cette première partie de la description plutôt que deux vecteurs V2H, V2L qui ont la même valeur.

Le second vecteur V2 est constitué au démarrage du cycle temporel par le moyen M2. : il comporte n = 3 éléments (TL₁, TL₂, TL₃) qui sont des seuils de charge du moyen de stockage d'énergie PSD associés aux prix de l'énergie p₁, p₂, p₃. Ce seuil de charge constitue une valeur cible c'est-à-dire que quel que soit sa valeur initiale, le niveau instantané SEL doit viser à rallier la valeur du seuil de charge TLᵢ.

Lors du premier cycle temporel C1, les valeurs TL₁, TL₂, TL₃ sont initialisées arbitrairement par le moyen M2. De préférence, l'initialisation des valeurs des éléments du second vecteur V2 est réalisée de manière à ce que la valeur du i-ième élément TLᵢ du second vecteur V2 est supérieure à celle du i+1-ième élément TLᵢ₊₁ du second vecteur V2 pour tout nombre i (dans l'exemple i est compris entre 1 et 2). On verra plus loin que la valeur des éléments TLᵢ est modifiée avec le temps, néanmoins on a déjà souligné qu'il est économiquement plus favorable de charger en énergie le moyen de stockage PSD à un plus fort niveau lorsque le prix de l'énergie est bas que lorsqu'il est élevé. Une initialisation des éléments du second vecteurs V2 qui tient compte de cette observation rend le système efficace plus rapidement. Ici on considère arbitrairement V2 = (TL₁, TL₂, TL₃) = (50, 20,1).

Pour les cycles temporels ultérieurs, la valeur de tous les éléments p₁, p₂, p₃ du premier vecteur V1 restera inchangée par rapport au cycle temporel précédent (sauf modification de la grille tarifaire par l'opérateur). Mais la valeur des éléments TL₁, TL₂, TL₃ du second vecteur V2 est mise à jour à l'issue de chaque cycle temporel par le moyen M2. La description de cette mise à jour est détaillée plus loin dans le présent document.

Lorsque la valeur d'un des éléments p₁, p₂, p₃ du premier vecteur V1 est modifiée par rapport au cycle temporel précédent (modification de la grille tarifaire par l'opérateur), le moyen M2 assigne à la valeur du i-ième élément TLⱼ du second vecteur V2 la valeur de l'élément TLᵢ₋₁ du second vecteur V2 pour le cycle temporel suivant. Par exemple si la valeur de p₂ est modifiée, on assigne la valeur de TL₁ au deuxième élément TL₂ du second vecteur V2.

A ce stade, le moyen M2 comporte donc une association d'un premier vecteur V1 comportant 3 éléments p₁, p₂, p₃ qui sont des prix d'énergie fournie par la source et d'un second vecteur V2 comportant également 3 éléments TL₁, TL₂, TL₃ qui sont des seuils de charge du moyen de stockage PSD associés aux prix p₁, p₂, p₃.

Le moyen M2 détermine également un seuil de charge courant QTL_{T1}, QTL_{T2}, QTL_{T3}, QTL_{T4} à partir de ladite association du premier et du second vecteur V1, V2 et de la grille tarifaire indiquant le prix q_{T1}, q_{T2}, q_{T3}, q_{T4} de l'énergie fournie par la source pendant la période courante T₁, T₂, T₃, T₄. Pour chaque prix q_{T1} le moyen M2 assigne au seuil de charge courant QTL_{T1} la valeur de l'élément TL₁, TL₂, TL₃ du second vecteur V2 qui correspond (c'est-à-dire qu'il porte le même indice i) à l'élément p₁, p₂, p₃ du premier vecteur V₁ égal au prix q_{Ti}.

Ainsi, ici le seuil de charge courant (QTL_{T1}, QTL_{T2}, QTL_{T3}, QTL_{T4}) vaut (50, 20, 5,20).

Nota bene : dans l'ordinogramme de la méthode selon l'invention correspondant au deuxième mode de réalisation de l'invention qui est représenté sur la figure 7, le moyen M2 détermine (à l'étape S2.2) un premier et un second seuil courant (QLTL_{Tj}, QHTL_{Tj}) à partir d'un premier vecteur V1 et de deux seconds vecteurs V2L, V2H puis à l'étape suivante (étape S3.1) il détermine un seuil local QTL_{Tj}. Dans le premier mode de réalisation de l'invention le premier seuil QLTL_{Tj} est égal au deuxième seuil QHTL_{Tj} et le seuil local (QTL_{Tj}) est égal au seuil courant QTL_{Tj} de charge.

Avantageusement, le moyen M2 comporte:
- un moyen pour recevoir la grille tarifaire q_{T1}, q_{T2}, q_{T3}, q_{T4};
- un moyen pour évaluer la valeur des éléments p₁, p₂, p₃ du premier vecteur V1 à partir de ladite grille tarifaire q_{T1}, q_{T2}, q_{T3}, q_{T4} au démarrage des cycles temporels ;
- un moyen pour évaluer la valeur des éléments TL₁, TL₂, TL₃ du second vecteur V2 au démarrage d'un cycle temporel C2 :
   ○ par une mise à jour de la valeur des éléments TL₁, TL₂, TL₃ lorsque la valeur des éléments p₁, p₂, p₃ du premier vecteur V1 est inchangée par rapport au cycle temporel précédent C1 ;
   ○ par une initialisation de la valeur des éléments TL₁, TL₂, TL₃ lorsque la valeur de tous les éléments p₁, p₂, p₃ du premier vecteur V1 est modifiée par rapport au cycle temporel précédent ou lors du premier cycle temporel;
   ○ par une assignation de la valeur du i-1-ième élément TLᵢ₋₁ du second vecteur V2 au i-ième élément TLᵢ du second vecteur V2 lorsque la valeur du i-ième élément pᵢ du premier vecteur V1 est modifiée par rapport au cycle temporel précédent.

Avantageusement, le moyen pour recevoir la grille tarifaire reçoit ladite grille tarifaire directement de l'opérateur PSO par une voie distincte de celle par laquelle l'énergie est véhiculée jusqu'au réseau local de transport d'énergie DEN, par exemple une connexion internet.

Alternativement, la grille tarifaire est envoyée par l'opérateur PSO au dispositif de contrôle GWY par la même voie que l'énergie est véhiculée jusqu'au réseau local DEN. La grille tarifaire peut être dans ce cas extraite au niveau du dispositif de commutation COM et envoyé par lui au dispositif de commande GWY. C'est cette situation qui est illustrée sur la figure 1. La grille tarifaire est envoyée par l'opérateur par exemple sous forme d'une information par courant porteur (CPL).

Avantageusement, le moyen M3 (également représenté sur la figure 5) du dispositif de contrôle GWY comporte :
- un moyen pour placer le dispositif de commutation COM dans un premier mode dans lequel le moyen de stockage d'énergie PSD fournit de l'énergie au dispositif client DCL, lorsque l'au moins un dispositif client DCL requiert de l'énergie et que le niveau instantané SEL d'énergie est strictement supérieur au seuil courant QTL_{T1}, QTL_{T2}, QTL_{T3}, QTL_{T4} de charge, où;
- un moyen pour placer le dispositif de commutation COM dans un second mode dans lequel l'opérateur PSO fournit de l'énergie simultanément au dispositif client DCL et au moyen de stockage d'énergie PSD, lorsque l'au moins un dispositif client DCL requiert de l'énergie et que le niveau instantané SEL d'énergie est inférieur ou égal au seuil courant QTL_{T1}, QTL_{T2}, QTL_{T3}, QTL_{T4} de charge.
- un moyen pour placer le dispositif de commutation COM dans un troisième mode dans lequel l'opérateur PSO fournit de l'énergie exclusivement au dispositif client DCL, lorsque l'au moins un dispositif client DCL requiert de l'énergie et que le niveau instantané SEL d'énergie est égal au seuil courant QTL_{T1}, QTL_{T2}, QTL_{T3}, QTL_{T4} de charge.
- un moyen pour placer le dispositif de commutation COM dans un quatrième mode dans lequel l'opérateur PSO fournit de l'énergie uniquement au moyen de stockage d'énergie PSD, lorsque l'au moins un dispositif client DCL ne requiert pas d'énergie et que le niveau instantané SEL d'énergie est inférieur au seuil courant QTL_{T1}, QTL_{T2}, QTL_{T3,} QTL_{T4} de charge;
- un moyen pour placer le dispositif de commutation COM dans un cinquième mode dans lequel l'opérateur PSO ne fournit pas d'énergie au dispositif client DCL et au moyen de stockage d'énergie PSD, lorsque l'au moins un dispositif client DCL
ne requiert pas d'énergie et que le niveau instantané SEL d'énergie est strictement supérieur au seuil courant QTL_{T1}, QTL_{T2}, QTL_{T3}, QTL_{T4} de charge.

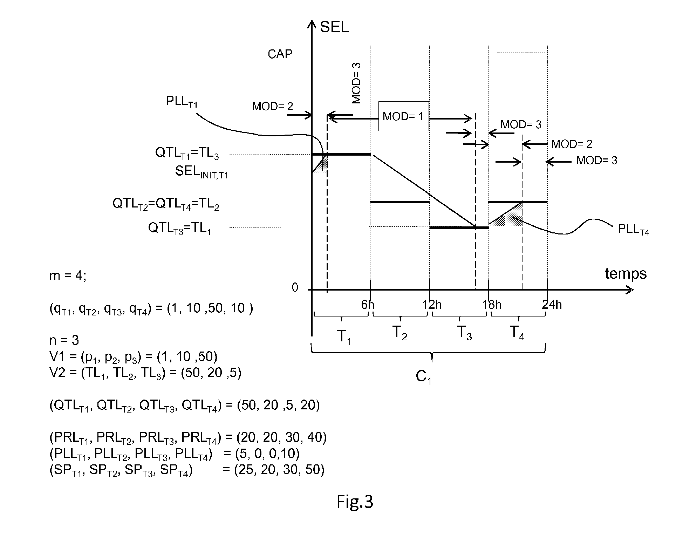

La figure 3 illustre une évolution temporelle du niveau instantané SEL d'énergie stockée dans le moyen de stockage PSD lorsque le moyen M3 du dispositif de contrôle GWY détermine et assigne le mode de configuration du dispositif de commutation COM.

La figure 3 illustre l'évolution du niveau instantané SEL d'énergie pour le premier mode de réalisation de l'invention (où un unique seuil de charge courant est lié à chaque prix d'énergie et donc à chaque période temporelle). Les seuils de charge courants QTL_{T1}, QTL_{T2}, QTL_{T3}, QTL_{T4} correspondant à l'exemple traité sont représentés par un trait horizontal épais couvrant la durée d'une période temporelle T₁, T₂, T₃, T₄.

Le niveau instantané SEL d'énergie peut évoluer entre la valeur 0 pour laquelle le moyen de stockage d'énergie PSD est vide et la valeur CAP qui représente la capacité maximale du moyen PSD. Par exemple, la capacité CAP du moyen de stockage d'énergie PSD est égale à 100.

Au démarrage de la première période temporelle T₁, le niveau instantané SEL_{INIT,T1} du moyen de stockage d'énergie PSD est connu du dispositif de contrôle GWY comme tout niveau instantané SEL d'énergie stockée dans le moyen de stockage PSD. Plus généralement, la valeur SEL_{INIT,Tj} est stockée dans le moyen M2 du dispositif de contrôle GWY à chaque démarrage de période temporelle Tⱼ.

Le dispositif de contrôle GWY détermine et assigne au dispositif COM un des modes de configuration MOD en fonction d'une comparaison entre un niveau instantané SEL d'énergie stockée dans le moyen de stockage PSD et le seuil local de charge QTL_{T1}, QTL_{T2}, QTL_{T3}, QTL_{T4} de la période temporelle courante T₁, T₂, T_{3,} T₄.

On fait l'hypothèse que le dispositif client DCL consomme de l'énergie de façon continue et avec un niveau constant sur les quatre périodes temporelles T₁, T₂, T₃, T₄ c'est-à-dire qu'il requiert un niveau d'énergie par unité de temps qui est constant. Sous cette hypothèse, seuls le premier, le deuxième et le troisième mode peuvent être déterminés par le dispositif de contrôle GWY et assigné au dispositif de commutation COM. D'autres hypothèses conduiraient naturellement à la détermination des autres modes de configuration.

Dans l'exemple représenté sur la figure 3, au démarrage du cycle temporel, la valeur du niveau instantané SEL d'énergie est égale à SEL_{INIT,T1} et est inférieure à celle du seuil local de charge QTL_{T1}. Puisque le dispositif client DCL requiert de l'énergie, conformément à la logique de détermination du mode de configuration exposée plus haut, le dispositif de contrôle GWY détermine le deuxième mode de configuration et l'assigne au dispositif de commutation COM jusqu'à ce que le niveau instantané SEL d'énergie atteigne la valeur du seuil local de charge QTL_{T1}. A ce moment, le dispositif de contrôle GWY détermine le troisième mode de configuration, c'est-à-dire que l'opérateur PSO alimente exclusivement le dispositif client DCL. Le moyen de stockage d'énergie PSD n'est plus alimenté et le niveau instantané SEL d'énergie est constant jusqu'à la fin de la période temporelle T₁. Au démarrage de la période temporelle T₂, le niveau instantané SEL d'énergie diminue continument à une vitesse qui dépend du niveau d'énergie requis par le dispositif DCL par unité de temps. La pente croissante de l'évolution du niveau SEL pendant le premier mode de configuration dépend de la vitesse de charge du moyen de stockage d'énergie PSD.

Pendant la période temporelle T₂ puis le début de la période temporelle T₃, le dispositif de contrôle GWY détermine et assigne toujours le premier mode de configuration au dispositif de commutation COM car le niveau instantané SEL d'énergie même s'il diminue reste toujours supérieur aux niveaux de seuil de charge local (respectivement QTL_{T2} sur la période temporelle T₂ et QTL_{T3} sur la période temporelle T₃): le niveau instantané SEL d'énergie décroit donc jusqu'à ce que le niveau instantané SEL d'énergie atteigne la valeur du seuil local QTL_{T3} de charge. A ce moment, le dispositif de contrôle GWY détermine le troisième mode de configuration, c'est-à-dire que le moyen de stockage d'énergie PSD n'est plus alimenté et le que niveau instantané SEL d'énergie est constant jusqu'à la fin de la période temporelle T₃.

Enfin sur la période temporelle T₄, tout comme pour la période temporelle T1, le dispositif de contrôle GWY détermine et assigne le deuxième mode de configuration au dispositif de commutation COM jusqu'à ce que le niveau instantané SEL d'énergie atteigne la valeur du seuil local QTL_{T4} de charge puis il détermine et assigne le troisième mode de configuration au dispositif de commutation COM.

La facture de la consommation en énergie peut être établie comme suit à partir de la détermination de la consommation en énergie du dispositif client DCL et du moyen de stockage PSD:

Sur les périodes temporelles T₁, T₂, T₃, T₄ le premier niveau PRL_{T1}, PRL_{T2}, PRL_{T3}, PRL_{T4} d'énergie consommée par le dispositif client DCL est connu du dispositif de commutation COM à l'issue de chaque période temporelle. L'information de la consommation en énergie du dispositif client DCL peut donc être délivrée au moyen M1 du dispositif de contrôle GWY à ce moment.

Par exemple, on considère (PRL_{T1}, PRL_{T2}, PRL_{T3}, PRL_{T4}) = (20, 20, 30, 40)

Par ailleurs, la consommation en énergie du moyen de stockage d'énergie PSD est également connue du dispositif de commutation COM.

Lorsque le mode de configuration assigné au dispositif de commutation COM est le premier mode, le moyen de stockage d'énergie PSD n'est pas chargé en énergie : ce dernier ne consomme donc aucune énergie.

Par contre, lorsque le mode de configuration assigné au dispositif de commutation est le second mode, le niveau instantané SEL d'énergie augmente ce qui correspond à une consommation d'énergie fournie par l'opérateur PSO. Cette consommation en énergie du moyen de stockage d'énergie PSD s'illustre par l'aire grisée (de forme triangulaire pour notre exemple) figurant sous la courbe d'évolution du niveau instantané SEL d'énergie aux moments où ce niveau instantané SEL augmente.

Sur les périodes temporelles T₁, T₂, T₃, T₄ le second niveau PLL_{T1}, PLL_{T2}, PLL_{T3}, PLL_{T4} d'énergie consommée par le moyen de stockage d'énergie PSD pour est connu du dispositif de commutation COM à l'issue de chaque période temporelle. L'information de la consommation en énergie du moyen de stockage d'énergie PSD peut donc être délivrée au moyen M1 du dispositif de contrôle GWY à ce moment. Pour la représentation de la figure 3, on considère (PLL_{T1}, PLL_{T2}, PLL_{T3}, PLL_{T4}) = (5, 0, 0, 10).

Avantageusement, le dispositif de commutation COM délivre au dispositif de contrôle GWY à l'issue de chaque période temporelle T₁, T₂, T₃, T₄ un premier niveau PRL_{T1}, PRL_{T2}, PRL_{T3}, PRL_{T4} d'énergie fournie à l'au moins un dispositif client DCL pendant ladite période temporelle T₁, T₂, T₃, T₄ et un second niveau PLL_{T1}, PLL_{T2}, PLL_{T3}, PLL_{T4} d'énergie chargée dans le moyen de stockage d'énergie PSD fournie par l'opérateur PSO pendant ladite période temporelle T₁, T₂, T₃, T₄.

En conclusion, le niveau SP_{T1}, SP_{T2}, SP_{T3}, SP_{T4}d'énergie fournie au système composé moyen de stockage d'énergie PSD et du dispositif client est égal sur les périodes temporelles T₁, T₂, T₃, T₄ à (PLL_{T1}+ PRL_{T1}, PLL_{T2}+ PRL_{T2}, PLL_{T3}+ PRL_{T3}, PLL_{T4}+ PRL_{T4}) = (25, 20, 30, 40).

Le coût réel de la fourniture en énergie par la source peut donc être donc établi par le moyen M4 du dispositif de contrôle GWY' à l'issue de chaque période temporelle T₁, T₂, T₃, T₄ sous la forme d'un premier coût à l'aide de la formule suivante (CR_{T1}, CR_{T2}, CR_{T3}, CR_{T4}) = (SP_{T1}.q_{T1}, SP_{T2}.q_{T2}, SP_{T3}.q_{T3}, SP_{T4}.q_{T4}) = (25, 200, 150, 500).

Puis un moyen M6 détermine un coût réel SCR1 de l'approvisionnement en énergie pendant le cycle temporel C1 en sommant les premiers coûts CR_{T1}, CR_{T2}, CR_{T3}, CR_{T4} conformément à la formule suivante SCR1 = CR_{T1} + CR_{T2} + CR_{T3} + CR_{T4} =875 dans notre exemple.

Avantageusement, le dispositif de contrôle GWY comporte:
- un moyen M4 pour évaluer à l'issue de chaque période temporelle T₁, T₂, T₃, T₄ un premier coût CR_{T1}, CR_{T2}, CR_{T3}, CR_{T4} de la fourniture par l'opérateur PSO pendant ladite période temporelle T₁, T₂, T₃, T₄ d'un niveau total SP_{T1}, SP_{T2,} SP_{T3}, SP_{T4} d'énergie égal à la somme du premier niveau PRL_{T1}, PRL_{T2}, PRL_{T3}, PRL_{T4} d'énergie et du second niveau PLL_{T1}, PLL_{T2}, PLL_{T3}, PLL_{T4} d'énergie fournie par l'opérateur PSO pendant ladite période temporelle T₁, T₂, T₃, T₄ où la valeur de seuil de charge du moyen de stockage PSD considérée par ledit moyen M3 pendant ladite période temporelle T₁, T₂, T₃, T₄ est la valeur de seuil courant QTL_{T1}, QTL_{T2}, QTL_{T3}, QTL_{T4} de charge;
- un moyen M6 pour sommer les m=4 premiers coûts CR_{T1}, CR_{T2}, CR_{T3}, CR_{T4} évalués à l'issue du cycle temporel pour obtenir, à l'issue dudit cycle temporel, un coût réel SCR1 de fourniture d'énergie par l'opérateur PSO pendant ledit cycle temporel;

Pour réduire la facture de l'approvisionnement en énergie fournie par l'opérateur PSO pour des cycles temporels ultérieurs C2, le dispositif GWY évalue n=3 coûts fictifs, c'est-à-dire simulés, de l'approvisionnement en énergie du dispositif DCL et du moyen PSD sur le cycle temporel courant C1 en faisant des hypothèses concernant :
- un niveau PRL_{T1}, PRL_{T2}, PRL_{T3}, PRL_{T4} d'énergie consommé par le dispositif client DCL identique à celle constatée au cours des périodes temporelles T₁, T₂, T₃, T₄ du cycle temporel C1 ;
- un niveau instantané SEL_{INIT,Tj} de charge du moyen de stockage d'énergie PSD au démarrage de la première période temporelle T₁ du cycle temporel C1 qui est identique à celui déterminé au cours du cycle temporel C1

Les 3 simulations réalisées correspondent à l'évaluation de factures énergétiques fictives dans des situations qui auraient pu être rencontrées si une valeur de seuil local de charge correspondant à une des périodes temporelle T₁, T₂, T₃, T₄ différait par rapport aux seuils locaux de charge QTL_{T1}, QTL_{T2}, QTL_{T3}, QTL_{T4} considérés en réalité pour le cycle temporel C1.

Pour ce faire, le dispositif de contrôle GWY comporte en outre:
- un moyen M5 pour évaluer à l'issue de chaque cycle temporel C₁ n=3 coût fictifs SCF1, SCF2, SCF3 de la fourniture d'énergie par l'opérateur PSO pendant ledit cycle temporel par l'opérateur PSO au moyen de stockage d'énergie PSD pendant ledit cycle temporel C₁ en considérant un niveau d'énergie fournie par l'opérateur PSO au dispositif client DCL pendant lesdites périodes temporelles T₁, T₂, T₃, T₄ est égal au premier niveau PRL_{T1}, PRL_{T2}, PRL_{T3}, PRL_{T4} d'énergie, ledit moyen M5 simulant un fonctionnement des moyens M1, M2, M3 en considérant successivement n=3 associations (V1, VF2₁); (V1, VF2₂); (V1, VF2₃) composées d'un premier vecteur V1 et d'un second vecteur fictif VF2₁, VF2₂, VF2₃ comportant 3 éléments (TL₁+δ, TL₂, TL₃) ; (TL₁, TL₂+δ, TL₃), (TL₁, TL₂, TLₙ+δ), où δ est un nombre entier positif stocké dans le moyen M2 ;
- un moyen M7 pour sommer 4 seconds coûts ((CF_{T1,1}, CF_{T2,1}, CF_{T3,1}, CF_{T4,1}); (CF_{T1,2}, CF_{T2,2}, CF_{T3,2}, CF_{T4,2}) ; (CF_{T1,3}, CF_{T2,3}, CF_{T3,3}, CF_{T4,2})) évalués à l'issue de chaque période temporelle T₁, T₂, T₂, T₄ pour obtenir, à l'issue dudit cycle temporel, un jeu de 3 coût fictifs SCF1, SCF2, SCF3 de la fourniture d'énergie par l'opérateur PSO pendant ledit cycle temporel.

Le moyen M5 évalue à l'issue pour chaque période temporelle T₁, T₂, T₃, T₄ un jeu de n=3 seconds coûts ((CF_{T1,1}, CF_{T1,2}, CF_{T1,3}) ; (CF_{T2,1}, CF_{T2,2}, CF_{T2,3}) ; (CF_{T3,1}, CF_{T3,2}, CF_{T3,3}) ; (CF_{T4,1}, CF_{T4,2}, CF_{T4,3})) de la fourniture d'énergie par l'opérateur PSO au moyen PSD pendant la période temporelle T₁, T₂, T₃, T₄ en considérant un niveau d'énergie fournie par l'opérateur PSO au dispositif client DCL pendant lesdites périodes temporelles T₁, T₂, T₃, T₄ égal au premier niveau PRL_{T1}, PRL_{T2}, PRL_{T3}, PRL_{T4} d'énergie ;

On ne décrira pas en détail les évaluations réalisées de seconds coûts par le moyen M5. Ces évaluations sont en effet identiques à celles menées par le moyen M4 et détaillées à l'aide de la figure 3 en considérant les 3 seconds vecteurs fictifs VF2₁ VF2₂ VF2₃ au lieu du seul second vecteur V2 d'origine. Les évaluations réalisées par le moyen M5 visent à établir quelle aurait été la consommation liée à la charge du moyen de stockage PSD si une valeur de de charge seuil différente de la valeur TL₁ avait été considérée.

A ce stade, le dispositif de contrôle GWY dispose d'une part du coût réel SCR1 correspondant au coût de la fourniture d'énergie effectivement facturé et d'autre part de 3 coûts fictifs SCF1, SCF2, SCF3 correspondant à des situations non rencontrées en réalité.

Le dispositif de contrôle GWY comporte en outre:
- un moyen M8 pour comparer la valeur du coût réel SCR1 et la valeur des 3 coûts fictifs SCF₁, SCF₂, SCF₃ ;

Avantageusement, le moyen (M2) comporte:
- un moyen pour recevoir les mises à jour déterminées par le moyen M9;
- un moyen pour assigner la valeur TLᵢ, + δ au i-ième élément du second vecteur V2 stocké dans le moyen M1 lorsque la valeur du coût fictif SCFᵢ est strictement inférieure à la valeur du coût réel SCR1;
- un moyen pour assigner la valeur TLᵢ - δ au i-ième élément du second vecteur V2 stocké dans le moyen M1 lorsque la valeur du coût fictif SCFᵢ est strictement supérieure à la valeur du coût réel SCR1.

Ainsi, lorsqu'une des comparaisons entre le coût réel SCR1 et un des coûts fictifs SCFᵢ permet de montrer que la facture de la fourniture en énergie aurait été moins élevée sur le cycle temporel qui vient de s'achever en considérant un seuil de charge du moyen de stockage d'énergie PSD de valeur TLᵢ +δ supérieure à la valeur actuelle TLᵢ, on assigne alors au seuil de charge la valeur TLᵢ +δ.

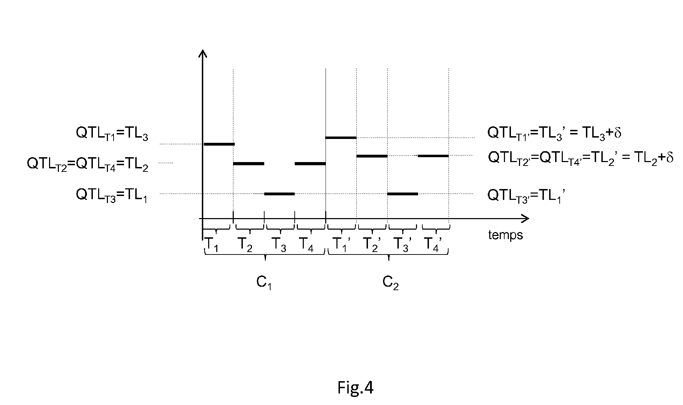

La figure 4 représente une situation dans laquelle
- SCF₃ a une valeur inférieure à celle de SCR1 à l'issue du cycle temporel C1et où par conséquent, la valeur du seuil de charge TL₃ est modifiée. Ceci entraine dans le cas d'espèce une augmentation de la valeur du seuil de charge d'une valeur δ pour la période temporelle T1' du cycle ultérieur C2.
- SCF₂ est inférieur à SCR1 à l'issue du cycle temporel C1 et où par conséquent, la valeur du seuil de charge TL₂ est modifiée. Ceci entraine dans le cas d'espèce une augmentation de la valeur du seuil de charge d'une valeur δ pour les périodes temporelles T2' et T4' du cycle ultérieur C2.

La figure 6a est une représentation, correspondant au premier mode de réalisation de l'invention, des domaines d'emploi des modes de configuration, lorsque le dispositif DCL requiert de l'énergie.

Un unique seuil de charge QTL_{T1} est associé au prix q_{T1} de l'énergie fournie par l'opérateur PSO pendant la période temporelle T1.

Lorsque le niveau instantané SEL de charge est strictement inférieur à QTL_{T1}, le mode de configuration déterminé par le dispositif GWY est le deuxième mode.

Lorsque le niveau instantané SEL de charge est strictement inférieur à QTL_{T1}, le mode de configuration déterminé par le dispositif GWY est le premier mode.

Lorsque le niveau instantané SEL de charge est égal à QTL_{T1}, le mode de configuration déterminé par le dispositif GWY est le troisième mode.

### Description propre au deuxième mode de réalisation de l'invention dans lequel deux seuils de charge LTLᵢ et HTLᵢ sont associé à un prix pᵢ de l'énergie fournie par l'opérateur PSO.

La description détaillée de ce deuxième mode de réalisation est très similaire à celle faite dans la partie précédente du document On va s'appuyer sur l'ordinogramme du deuxième mode de réalisation de l'invention représenté sur la figure 7 pour identifier ce qui distingue le premier et le deuxième mode de réalisation

Une première différence tient en ce que le dispositif GWY détermine, dans une étape S2.1,un premier et un deuxième second vecteur V2L et V2H plutôt qu'un unique second vecteur V2.

Le premier second vecteur V2L comporte n éléments (LTL₁, ..., LTLᵢ;, ..., LTLₙ).Le second vecteur V2H comporte n éléments (HTL₁, ..., HTLᵢ; ..., HTLₙ).Où LTLᵢ < HTLᵢ

Par la suite, dans une étape 2.2 représentée sur la figure 7, le moyen M2 du dispositif GWY détermine un premier et un deuxième seuil courant (QLTL_{T1}, ..., QLTL_{Tj}, ..., QLTL_{Tm}), (QHTL_{T1} ..., QHTL_{Tj}, ..., QHTL_{Tm}) de charge du moyen de stockage PSD associé à chaque période temporelle Tᵢ, ..., Tⱼ, ..., Tₘ.

Pout tout j compris entre 1 et m, QLTL_{Tj} est inférieur à QHTL_{Tj}.

Dans le premier mode de réalisation de l'invention, ce étape 2.2 vis à déterminer un unique seuil (QTL_{T1}, ..., QTL_{Tj}, ..., QTL_{Tm}) de charge du moyen de stockage PSD associé à chaque période temporelle T₁, ..., Tⱼ, ..., Tₘ.,

Dans une étape 3.2 ultérieure, le moyen M2 du dispositif GWY détermine un seuil local QTL_{Tj} à partir d'une comparaison entre un niveau instantané SEL_{INIT,Tj} d'énergie stockée dans le moyen de stockage PSD au démarrage de la période temporelle Tⱼ et un premier et un deuxième seuil courant QLTL_{Tj}, QHTL_{Tj} de charge du moyen de stockage PSD associé à chaque période temporelle Tⱼ. La figure 6b illustre cette détermination du seuil local QTL_{Tj}.

Le premier et le deuxième seuil de charge (QLTL_{T1}, QHTL_{T1} où QLTL_{T1} < QHTL_{T1}) sont associés au prix de l'énergie fournie pendant la période T₁.

Lorsque le niveau instantané SEL_{INIT,T1} d'énergie stockée dans le moyen de stockage PSD au démarrage de la période temporelle est strictement inférieur à QLTL_{T1}, le seuil local QTL_{T1} déterminé par le dispositif GWY est le premier seuil QLTL_{T1} de charge.

Lorsque le niveau instantané SEL_{INIT,T1} est strictement supérieur à QHTL_{T1}, le seuil local QTL_{T1} déterminé par le dispositif GWY est le deuxième seuil QHTL_{T1}de charge.

Lorsqu'enfin, le niveau instantané SEL_{INIT,T1} de charge est supérieur ou égal à QLTL_{T1} et inférieur ou égal à QHTL_{T1} le seuil local QTL_{T1} déterminé par le dispositif GWY est le niveau instantané SEL_{INIT,T1}.

L'étape S3.3 est identique pour le premier et le deuxième mode de réalisation de l'invention. Lorsque le dispositif DCL requiert de l'énergie sur toute la période cette étape peut conduire à au plus deux modifications du mode de configuration : dans une période temporelle Tⱼ le dispositif GWY peut assigner au dispositif COM successivement le deuxième mode puis troisième mode ou le premier mode puis le troisième mode pendant ladite période temporelle Tⱼ.

L'étape S4 pour évaluer un coût réel SCR1 de la fourniture par l'opérateur PSO d'un niveau total SP_{T1}, ..., SP_{Tj}, ..., SP_{Tm} d'énergie est identique pour le premier et le deuxième mode de réalisation de invention.

L'étape S5 qui concerne l'évaluation de coûts fictifs diffère pour le premier et le deuxième mode de réalisation de invention. Le paragraphe qui suit va présenter ces différences.

Une première différence tient dans le nombre de coûts fictifs évalués : 2n pour le deuxième mode de réalisation et n pour le premier mode de réalisation.

Les 2n coûts fictifs SCLF₁, ..., SCLFᵢ, ..., SCLFₙ, SCHF₁, ..., SCHFᵢ, ..., SCHFₙ résultent de 2n simulations réalisées par le dispositif GWY du coût d'une fourniture d'énergie par l'opérateur PSO au système dispositif DCL et moyen PSD.

Les hypothèses prises en compte pour mener à bien ces simulations sont les suivantes:
1. Le niveau instantané SEL_{INIT,T1} d'énergie au démarrage de la première période temporelle T₁ est identique pour toutes les simulations et a la valeur effectivement mesurée à cet instant. La valeur SEL_{INIT,T1} est stockée pendant le cycle temporel à cet effet.
2. Le niveau d'énergie fournie par l'opérateur PSO au dispositif client DCL pendant lesdites périodes temporelles T₁, ..., Tⱼ, ..., Tₘ égal au premier niveau PRL_{T1}, ..., PRL_{Tj}, ..., PRL_{Tm} d'énergie.

Les 2 premières hypothèses ci-dessus sont également prises en compte pour le premier mode de réalisation de l'invention.

Dans l'étape S5 le moyen M5 simule un fonctionnement des moyens M1, M2, M3 en considérant successivement 2n associations (V1, V2LF2_{i,} V2LF2ᵢ), (V1, V2HF2ᵢ, V2HF2ᵢ) composées du premier vecteur V1, et d'un second vecteur fictif VLF2ᵢ, VHF2ᵢ où le second vecteur fictif VLF2ᵢ comporte n éléments LTL₁, ..., LTLᵢ+δ, ..., LTLₙ et le second vecteur fictif VLF2ᵢ comporte n éléments HTL₁, ..., HTLᵢ+δ, ..., HTLₙ, où δ est un nombre entier positif stocké dans le moyen M2.

Cette étape est similaire à celle mise en oeuvre dans le premier mode de réalisation de l'invention, dans le deuxième mode de réalisation : elle est mise en oeuvre à deux reprises dans le deuxième mode de réalisation pour obtenir les 2n coûts fictifs.

L'avantage principal des différents modes de réalisation de l'invention présentés ci-dessus est de réduire le montant de la facture de l'approvisionnement en énergie de l'unité d'habitation qui en est équipé ... tout en libérant son ou ses occupants des contraintes liées à l'heure de la consommation de l'énergie, c'est-à-dire des contraintes liées à l'heure de la mise en marche des équipements ménagers. En particulier, avec ces modes de réalisation de l'invention il n'est plus besoin de système de programmation de mise en marche sur les équipements ménagers : machine à laver le linge, pyrolyse de four ou autre ce qui peut jouer également sur une réduction de leur prix à l'achat et une meilleur fiabilité.

Ces modes de réalisation représentent également l'avantage de réduire le besoin en moyen de production d'énergie. Un opérateur chargé de produire l'énergie doit dimensionner son moyen de production d'énergie à partir d'estimations sur le besoin maximum en fourniture d'énergie. Les modes de réalisation décrits permettent de lisser l'heure de fourniture d'énergie grâce à une incitation d'ordre tarifaire ce qui a pour conséquence de réduire le niveau du pic de consommation en énergie.

Un troisième avantage de ces modes de réalisation réside dans la simplicité de leur déploiement sur un réseau électrique domestique d'une l'unité d'habitation individuelle. Les modes de réalisation de l'invention comportent ou mettent en oeuvre essentiellement un moyen de stockage d'énergie PSD, un dispositif de commutation COM et un dispositif de contrôle GWY. On l'a rappelé plus haut, il est de plus en plus fréquent aujourd'hui que les unités d'habitations comportent de tel moyen de stockage d'énergie PSD, et à l'avenir la présence de ces moyens va probablement se développer rapidement en lien avec le développement des véhicules électriques. Le dispositif COM assure une fonction d'interrupteur configurable qui peut être facilement intégré sur le chemin de l'énergie conduisant au réseau local d'énergie par exemple au sein d'un « compteur intelligent ou même au niveau du moyen de stockage d'énergie PSD. Le dispositif GWY qui configure le mode du dispositif COM peut être intégré par exemple soit à une passerelle d'accès d'un réseau local de communication de l'unité d'habitation disposant de moyens de stockage d'information et de moyens de calcul soit au même « compteur intelligent ».

D'autres avantages de ce mode de réalisation tiennent à son caractère automatique et adaptatif déjà évoqué plus haut.

Enfin, un autre avantage de ce mode de réalisation est sa faculté à protéger la vie privée des consommateurs individuels d'observations intrusives que serait susceptible de faire l'opérateur fournisseur d'énergie. En effet, les nouveaux compteurs intelligents sont adaptés pour fournir un rapport en temps réel sur le niveau d'énergie fournie à l'unité d'habitation qui en est équipé- En décorrèlant les horaires de mise en marche des équipements du réseau local et les horaires où l'énergie est fournie au réseau local, le mode de réalisation masque à l'opérateur une partie des informations sur le mode de vie des occupants de l'unité d'habitation. Par exemple, il rend impossible de détecter une présence humaine dans une unité d'habitation individuelle sur la base d'une seule information de fourniture d'énergie électrique de l'unité d'habitation puisque cette fourniture d'énergie peut avoir pour but d'augmenter le niveau de charge du moyen de stockage d'énergie et non de répondre à la consommation d'un dispositif du réseau local.

Le deuxième mode de réalisation de l'invention est bien adapté aux situations où le moyen de stockage d'énergie PSD a un rendement inférieur à 100% (aussi bien pour stocker de l'énergie et/ou pour la restituer) car l'existence du premier et du deuxième seuil de charge permet de privilégier la situation où le dispositif client DCL est alimenté directement par l'opérateur et sans perte. Toutefois il présente l'inconvénient d'être plus couteux en termes de nombre de calculs puisqu'il requiert 2n évaluations de prix fictifs et 2n comparaisons de prix quand seulement n évaluations de prix fictifs et n comparaisons de prix sont nécessaires pour le premier mode de réalisation.

Avantageusement, le moyen M3 comporte :
- un moyen pour placer le dispositif COM dans un premier mode dans lequel le moyen de stockage d'énergie PSD fournit de l'énergie au dispositif client DCL, lorsque le dispositif client DCL requiert de l'énergie et le niveau instantané SEL d'énergie est strictement supérieur au seuil local QTL_{T1}, ..., QTL_{Tj}, ..., QTL_{Tm} ;
- un moyen pour placer le dispositif COM dans un second mode dans lequel l'opérateur PSO fournit de l'énergie simultanément au dispositif client DCL et au moyen de stockage d'énergie PSD, lorsque le dispositif client DCL requiert de l'énergie et que le niveau instantané SEL d'énergie est strictement inférieur au seuil local QTL_{T1}, .... QTL_{Tj}, ..., QTL_{Tm};
- un moyen pour placer le dispositif COM dans un troisième mode dans lequel l'opérateur PSO fournit de l'énergie exclusivement au dispositif client DCL, lorsque le dispositif client DCL requiert de l'énergie et que le niveau instantané SEL d'énergie est égal au seuil local QTL_{T1}, ..., QTL_{Tj}, ..., OTL_{Tm}.

Avantageusement, le moyen M2 comporte :
- un moyen pour recevoir la grille tarifaire q_{T1}, ..., q_{Tj}, ..., q_{Tm} de l'opérateur PSO;
- un moyen pour évaluer, au démarrage de chaque cycle temporel C₁, C2, la valeur des éléments p₁, .... p₁, .... pₙ du premier vecteur V1 à partir de ladite grille tarifaire q_{T1} ..., q_{Tj}, ... q_{Tm} et la valeur des éléments LTL₁, ..., LTLᵢ, ..., LTL_{n,} HTL₁, .... HTLⱼ, ..., HTLₙ des seconds vecteurs V2L, V2H:
   ○ par une initialisation de la valeur des éléments des seconds vecteurs V2L, V2H lorsque la valeur de tous les éléments p₁, ..., pᵢ, ..., pₙ du premier vecteur V1 est modifiée par rapport au cycle temporel précédent ou lors d'un premier cycle temporel C1;
   ○ par une assignation de la valeur du i-1-ème élément LTLᵢ₋₁, HTLᵢ₋₁ du second vecteur V2L, V2H au i-ème élément LTLᵢ₋₁, HTLᵢ₋₁ du second vecteur V2L, V2H lorsque la valeur du i-éme élément pᵢ du premier vecteur V1 est modifiée par rapport au cycle temporel qui précéde ;
   ○ par une mise à jour de la valeur des éléments des seconds vecteurs V2L, V2H lorsque la valeur de tous les éléments P₁, ..., p_{i,} ...., Pₙ du premier vecteur V1 est inchangée par rapport au cycle temporel qui précède.

Avantageusement, le dispositif de contrôle GWY comporte en outre:
- un moyen M4 pour évaluer à l'issue de chaque période temporelle T₁, ..., Tᵢ, ..., Tₘ un premier coût CR_{T1}, ..., CR_{Tj}, ...,CR_{Tm}, de la fourniture par l'opérateur PSO pendant ladite période temporelle T₁, ..., Tⱼ, ..., Tₘ d'un niveau total SP_{T1}, ..., SP_{Tj}, SP_{Tm}, d'énergie égal à la somme du premier niveau d'énergie PRL_{T1}, ..., PRL_{Tj}, ..., PPL_{Tm} et du second niveau PLL_{T1}, ..., PLL_{Tj}, ..., PLL_{Tm} d'énergie;
- un moyen M5 pour évaluer deux jeux de n seconds coûts CLF_{T1,1}, ..., CLF-_{T1,1,} CLF_{T1,n,} ..., CLF_{Tj.1,} ..., CLF_{Tj.1}, ..., CLF_{1j.n}, ..., CLF_{Tm,1}, .... CLE_{Tm,1}, ..., CLF_{Tm,n}, CHF_{T1,1}, ..., CHF_{T1,1}, ..., CHF_{T1,n}, ..., CHF_{Tj,1}, ..., CHF_{Tj,i}, ..., CHF_{Tj,n}, ..., CHF_{Tm,1}, ..., CHF_{Tm,i}, ..., CHF_{Tm,n} de la fourniture d'énergie par l'opérateur PSO au moyen de stockage d'énergie PSD pendant ladite période temporelle T₁, .... Tⱼ, ..., Tₘ en considérant un niveau d'énergie fournie par l'opérateur PSO au dispositif client DCL pendant lesdites périodes temporelles T₁, .... Tⱼ, ..., Tₘ égal au premier niveau PRL_{T1}, ..., PRL_{Tj}, ..., PRL_{Tm} d'énergie, ledit moyen M5 simule un fonctionnement des moyens M1, M2, M3 en considérant successivement 2n associations V1, V2LF2ᵢ, V2LF2ᵢ, V1. V2HF2ⱼ, V2HF2ᵢ composées du premier vecteur V1 et d'un second vecteur fictif VLF2ᵢ, VHF2ⱼ où le second vecteur fictif VLF2ᵢ comporte n éléments LTL₁, ..., LTLᵢ+δ, ..., LTLₙ et le second vecteur fictif VLF2ᵢ comporte n éléments HTL₁, ... , HTL₁+δ, HTLₙ, où δ est un nombre entier positif stocké dans le moyen M2 :
- un moyen M6 pour sommer les m premiers coûts CR_{T1}, ...CR_{Tj} ...,GR_{Tm} évalués à l'issue du cycle temporel pour obtenir un coût réel SCR1 de fourniture d'énergie par l'opérateur PSO pendant ledit cycle temporel;
- un moyen M7 pour sommer lesdits m seconds coûts CLF_{T1,1}, ..., CLF_{T1,i} ..., CLF_{T1,n}, ..., CLF_{Tj.1}, ..., CLF_{Tj,i}, ..., CLF_{-Tj,n}, ... , CLF_{Tm,1}, ..., CLF_{Tm,i}, ..., CLF_{Tm,n}, CHF_{T1,1,} ..., CHF_{T1,1}, ..., CHF_{T1,n}, ..., CHF_{Tj,1}, ..., CHF_{Tj,i} ..., CHF_{Tj,n}, ... , CHF_{Tm,1}, ..., CHF_{Tm,i}, ..., CHF_{Tm,n} évalués à l'issue de chaque cycle temporel C₁, C₂ pour obtenir au moins deux jeux de n coût fictifs SCLF₁, ..., SCLFᵢ, ..., SCLFₙ, SCHE₁, ..., SCHFᵢ, ..., SCHFₙ de la fourniture d'énergie par l'opérateur PSO pendant ledit cycle temporel
- un moyen M8 pour comparer à l'issue du cycle temporel la valeur du coût réel SCR1 et la valeur de chacun des coûts fictifs SCLF₁, ..., SCLFᵢ, ..., SCLFₙ, SCHF₁, ..., SCHFᵢ, ..., SCHF, et délivrer des résultats RESL₁, ..., RESLᵢ, .... RESLₙ, RESH₁, ..., RESHᵢ, ..., RESHₙ desdites comparaisons.

Avantageusement, le moyen M2 comporte en outre:
- un moyen pour recevoir lesdits résultats desdites comparaisons délivrés par le moyen M8;
- un moyen pour ajouter la valeur δ à la valeur du i-ième élément du second vecteur V2L, V2H stocké dans le moyen M1 lorsque le résultat RESLᵢ, RESHᵢ établit que la valeur du coût fictif SCLFᵢ, SCHFᵢ est strictement inférieure à la valeur du coût réel SCR1;
- un moyen pour retrancher la valeur à à la valeur du i-ième élément du second vecteur V2L, V2H stocké dans le moyen M1 lorsque le résultat RESLᵢ, RESHᵢ établit que la valeur du coût fictif SCLFᵢ, SCHFᵢ est strictement supérieure à la valeur du coût réel SCR1.

Avantageusement, le moyen M3 comporte en outre :
- un moyen pour placer le dispositif COM dans un quatrième mode dans lequel l'opérateur PSO fournit de l'énergie uniquement au moyen de stockage d'énergie PSD, lorsque le dispositif client DCL ne requiert pas d'énergie et tant que le niveau instantané SEL d'énergie est strictement inférieur au seuil local QTL_{T1}, ..., QTL_{T3}, ..., QTL_{Tm};
- un moyen pour placer le dispositif COM dans un cinquième mode dans lequel l'opérateur PSO ne fournit pas d'énergie au dispositif client DCL et au moyen de stockage d'énergie PSD, lorsque le dispositif client DCL ne requiert pas d'énergie et lorsque le niveau instantané SEL d'énergie est supérieur ou égal au seuil local QTL_{T1}, ..., QTL_{Tj}, ..., QTL_{Tm}.

Bien que l'invention ait été décrite en liaison avec deux modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de gestion de l'alimentation en énergie d'un dispositif client (DCL) connecté à un réseau local de transport d'énergie (DEN), le dispositif client (DCL) pouvant être alimenté en l'énergie au travers un dispositif de commutation (COM) connecté audit réseau (DEN), un opérateur (PSO) fournissant de l'énergie audit réseau (DEN) suivant une grille tarifaire (q_{T1}, ..., q_{Tj}, ..., q_{Tm}), indiquant un prix d'énergie en fonction de l'heure de la fourniture de l'énergie par rapport à un nombre m de périodes temporelles successives (T₁, ..., Tⱼ, ..., Tₘ) formant un cycle temporel où m est un nombre entier supérieur ou égal à 2, et où j est un nombre entier compris entre 1 et m, **caractérisé en ce que** ledit système comprend un moyen de stockage d'énergie (PSD) connecté audit réseau (DEN) au travers du dispositif de commutation (COM) pouvant être configuré suivant :
- Un premier mode (MOD) dans lequel le moyen de stockage d'énergie (PSD) fournit de l'énergie au dispositif client (DCL) ; ou
- Un deuxième mode (MOD) dans lequel l'opérateur (PSO) fournit de l'énergie simultanément au dispositif client (DCL) et au moyen de stockage d'énergie (PSD) ;
- Un troisième mode (MOD) dans lequel l'opérateur (PSO) fournit de l'énergie exclusivement au dispositif client (DCL);
Et **en ce qu'**il comporte en outre un dispositif de contrôle (GWY) configuré pour déterminer et assigner au dispositif (COM) un des modes de configuration (MOD) en fonction d'une comparaison entre un niveau instantané (SEL) d'énergie stockée dans le moyen de stockage (PSD) et un seuil local (QTL_{T1}, ..., QTL_{Tj}, ..., QTL_{Tm}) associé à chaque période temporelle (T₁, ..., Tⱼ, ..., Tₘ).

2. système selon la revendication 1, **caractérisé en ce que** le seuil local (QTL_{Tj}) est déterminé à partir d'une comparaison entre le niveau instantané (SEL_{INIT,Tj}) d'énergie stockée dans le moyen de stockage (PSD) au démarrage de la période temporelle (Tⱼ) et un premier et un deuxième seuil courant (QLTL_{Tj,} QHTL_{Tj}) de charge du moyen de stockage (PSD) associé à chaque période temporelle (Tⱼ).

3. Système selon l'une des revendications 1 à 2, **caractérisé en ce que** lorsque le dispositif client (DCL) requiert de l'énergie, le dispositif de contrôle (GWY) détermine et assigne au dispositif de commutation (COM) :
- le premier mode (MOD) lorsque le niveau instantané (SEL) d'énergie est strictement supérieur au seuil local (QTL_{T1}, ..., QTL_{Tj}, ..., QTL_{Tm});
- le deuxième mode (MOD) lorsque le niveau instantané (SEL) d'énergie est strictement inférieur au seuil local (QTL_{T1}, ..., QTL_{Tj}, ..., QTL_{Tm},);
- le troisième mode (MOD) lorsque le niveau instantané (SEL) d'énergie est égal au seuil local (QTL_{T1}, ..., QTL_{Tj}, ..., QTL_{Tm}).

4. Système selon l'une des revendications 1 à 3, **caractérisé en ce que** le dispositif de commutation (COM) délivre au dispositif de contrôle (GWY) à l'issue de chaque période temporelle (T₁, ..., Tⱼ, ..., Tₘ) un premier niveau (PRL_{T1}, ..., PRL_{Tj}, ..., PPL_{Tm}) d'énergie fournie par l'opérateur (PSO) au dispositif client (DCL) et un second niveau (PLL_{T1}, ..., PLL_{Tj}, ..., PLL_{Tm}) d'énergie fournie par l'opérateur (PSO) au moyen de stockage d'énergie (PSD) pendant ladite période temporelle (T₁, ..., Tⱼ, ..., Tₘ).

5. Système selon l'une des revendications 1 à 4, **caractérisé en ce que** le dispositif de contrôle (GWY) est adapté pour déterminer un premier vecteur (V1) de n éléments (p₁, ..., pᵢ, ..., pₙ) qui correspondent aux prix d'énergie de la grille tarifaire (q_{T1}, ..., q_{Tj}, ..., q_{Tm}) classés suivant un ordre croissant, et deux seconds vecteurs (V2L, V2H) de n éléments ((LTL₁, ..., LTLᵢ, ..., LTLₙ), (HTL₁, ..., HTLᵢ, ..., HTLₙ)) qui sont des seuils de charge du moyen de stockage (PSD) associés aux prix (p₁, ..., pᵢ, ..., pₙ), où i est un nombre entier compris entre 1 et n, et **en ce que** le dispositif (GWY) est en outre adapté pour déterminer le premier et le deuxième seuil courant ((QLTL_{T1}, ..., QLTL_{Tj}, ..., QLTL_{Tm}), (QHTL_{T1}, ..., QHTL_{Tj}, ..., QHTL_{Tm})) à partir d'une association du premier et des seconds vecteurs (V1, V2L, V2H) et de ladite grille tarifaires ..., q_{Tj}, ..., q_{Tm}).

6. Système selon la revendication 5, **caractérisé en ce que** le dispositif de contrôle (GWY) met à jour, à l'issue de chaque cycle temporel, la valeur des éléments ((LTL₁, ..., LTLᵢ, .... LTLₙ), (HTL₁, ..., HTLᵢ, ..., HTLₙ)) des deux seconds vecteurs (V2L, V2H) à partir d'un résultat de comparaison entre un coût réel (SCR1) de la fourniture par l'opérateur (PSO) d'un niveau total (SP_{T1}, ..., SP₁), ..., SP_{Tm}) d'énergie et 2n coûts fictifs ((SCLF₁ ..., SCLFᵢ, ..., SCLFₙ), (SCHF₁, ..., SCHFᵢ, ..., SCHFₙ)), où le niveau total (SP_{T1}, ..., SP_{Tj}, ..., SP_{Tm}) est égal à la somme du premier niveau (PRL_{T1}, ..., PRL_{Tj}, ..., PPL_{Tm}) d'énergie et du second niveau (PLL_{T1}, ..., PLL_{Tj}, ..., PLL_{Tm}) d'énergie pendant lesdites périodes temporelles T₁, ..., Tⱼ, ..., Tₘ et où les coûts fictifs ((SCLF₁, .... SCLFᵢ, ..., SCLFₙ), (SCHF₁, ..., SCHFⱼ, ..., SCHFₙ)) résultent de 2n simulations réalisées par le disposait (GWY) du coût d'une fourniture d'énergie par l'opérateur (PSO) audit système, en considérant un niveau d'énergie fournie par l'opérateur (PSO) au dispositif client (DCL) pendant lesdites périodes temporelles (T₁, ..., Tⱼ, ..., Tₘ) égal au premier niveau (PRL_{T1}, ..., PRL_{Tj}, ..., PRL_{Tm}) d'énergie et en considérant successivement 2n associations ((V1, V2LF2ᵢ V2LF2ⱼ), (V1, V2HF2ᵢ V2HF2ⱼ)) composées du premier vecteur (V1) et d'un second vecteur fictif (VLF2ᵢ VHF2ⱼ) où le second vecteur fictif (VHF2ᵢ) comporte n éléments (LTL₁, LTLᵢ+δ, ..., LTLₙ) et le second vecteur fictif (VLF2ᵢ) comporte n éléments (HTL₁, ..., HTLᵢ+δ, ..., HTLₙ), où à est un nombre entier positif stocké dans le dispositif (GWY).

7. système selon l'une des revendications précédentes, **caractérisé en ce que** le dispositif de commutation (COM) peut, en outre, être configuré suivant:
- Un quatrième mode (MOD) dans lequel l'opérateur (PSO) fournit de l'énergie uniquement au moyen de stockage d'énergie (PSD);
- Un cinquième mode (MOD) dans lequel l'opérateur (PSO) ne fournit pas d'énergie au système ;
Et **en ce que** lorsque le dispositif client (DCL) ne requiert pas l'énergie, le dispositif de contrôle (GWY) détermine et assigne au dispositif (COM) :
- le quatrième mode (MOD) si que le niveau instantané (SEL) d'énergie est strictement inférieur au seuil local (QTL_{T1}, ..., QTL_{Tj}, ..., QTL_{Tm});
- le cinquième mode (MOD) si le niveau instantané (SEL) d'énergie est supérieur ou égal au seuil local (QTL_{T1}, ..., QTL_{Tj}, ..., QTL_{Tm}).

8. Dispositif de contrôle (GWY) pour un système de gestion de l'alimentation en énergie d'un dispositif client (DCL) connecté à un réseau local de transport d'énergie (DEN), le dispositif client (DCL) pouvant être alimenté en l'énergie au travers un dispositif de commutation (COM) connecté audit réseau (DEN), un opérateur (PSO) fournissant de l'énergie audit réseau (DEN) suivant une grille tarifaire (q_{T1}, .... q_{Tj}, ... q_{Tm}), indiquant un prix d'énergie en fonction de l'heure de la fourniture de l'énergie par rapport à un nombre m de périodes temporelles successives (T₁, ..., Tⱼ, ..., Tₘ) formant un cycle temporel (C1, C2) où m est un nombre entier supérieur ou égal à 2, et où j est un nombre entier compris entre 1 et m, **caractérisé en ce qu'**il comporte:
- un moyen (M1) pour recevoir du dispositif de commutation (COM) à l'issue de chaque période temporelle (T₁, ..., Tⱼ, ..., Tₘ) un premier niveau (PRL_{T1}, ..., PRL_{Tj,} ..., PRL_{Tm}) d'énergie fournie par l'opérateur (PSO) au dispositif client (DCL) et un second niveau (PLL_{T1}, ..., PLL_{Tj}, ..., PLL_{Tm}) d'énergie fournie par l'opérateur (PSO) au moyen de stockage d'énergie (PSD) pendant ladite période temporelle (T₁, ..., Tⱼ, ..., Tₘ);
- un moyen (M2) qui comporte une association d'un premier vecteur (V1) de n éléments (p₁, ..., pᵢ, ..., pₙ) correspondant aux prix d'énergie de la grille tarifaire (q_{T1}, ..., q_{Tj}, ..., q_{Tm}) classés suivant un ordre croissant et de deux seconds vecteurs (V2L, V2H) comportant chacun n éléments ((LTL₁, ..., LTLᵢ, ..., LTLₙ), (HTL₁, ..., HTLⱼ, ..., HTLₙ)) qui sont des seuils de charge du moyen (PSD) associés aux prix (p₁, ..., p₁, ..., pₙ), où i est un nombre entier compris entre 1 et n, ledit moyen (M2) est en outre configuré pour déterminer un premier et un deuxième seuil courant ((QLTL_{T1} ..., QLTL_{Tj}, ..., QLTL_{Tm}), (QHTL_{T1,} ..., QHTL_{Tj} ..., QHTL_{Tm})) de charge à partir de ladite association (V1, V2L, V2H) et de ladite grille tarifaire (q_{T1}, ..., q_{Tj}, ..., q_{Tm}), ledit moyen (M2) est en outre adapté pour déterminer un seuil local (QTLn, ..., QTL_{Tj}, ..., QTL_{Tm}) à partir d'une comparaison entre le niveau instantané (SEL_{INIT,Tj}) d'énergie stockée dans le moyen (PSD) au démarrage de période temporelle (Tⱼ) et lesdits premier et deuxième seuil courant (QLTL_{Tj}, QHTL_{Tj}) associé à ladite période temporelle (Tⱼ);
- un moyen (M3) pour déterminer et assigner en temps réel un mode de configuration (MOD) au dispositif (COM) sur la base d'une comparaison entre :
○ le niveau instantané (SEL) que ledit moyen (M3) reçoit en temps réel dudit moyen de stockage (PSD) : et
○ la valeur du seuil local (QTL_{T1}, ..., QTL_{Tj}, ..., QTL_{Tm}) associé à ladite période temporelle (T₁, ..., Tⱼ, ..., Tₘ).

9. Dispositif de contrôle (GWY) selon la revendication 8, **caractérisé en ce que** le moyen (M3) comporte :
- un moyen pour placer le dispositif (COM) dans un premier mode dans lequel le moyen de stockage d'énergie (PSD) fournit de l'énergie au dispositif client (DCL), lorsque le dispositif client (DCL) requiert de l'énergie et le niveau instantané (SEL) d'énergie est strictement supérieur au seuil local (QTL_{T1}, ..., QTL_{Tj}, ..., QTL_{Tm});
- un moyen pour placer le dispositif (COM) dans un second mode dans lequel l'opérateur (PSO) fournit de l'énergie simultanément au dispositif client (DCL) et au moyen de stockage d'énergie (PSD), lorsque le dispositif client (DCL) requiert de l'énergie et que le niveau instantané (SEL) d'énergie est strictement inférieur au seuil local (OTL_{T1}, ..., QTL_{Tj}, ..., QTL_{Tm});
- un moyen pour placer le dispositif (COM) dans un troisième mode dans lequel l'opérateur (PSO) fournit de l'énergie exclusivement au dispositif client (DCL), lorsque le dispositif client (DCL) requiert de l'énergie et que le niveau instantané (SEL) d'énergie est égal au seuil local (QTL_{T1}, ..., QTL_{Tj}, ..., QTL_{Tm}).

10. Dispositif de contrôle (GWY) selon l'une des revendications 8 ou 9, **caractérisé en ce que** le moyen (M2) comporte :
- un moyen pour recevoir la grille tarifaire (q_{T1}, ..., q_{Tj}, ..., q_{Tm}) de l'opérateur (PSO);
- un moyen pour évaluer, au démarrage de chaque cycle temporel (C1, C2), la valeur des éléments (p₁, ..., pᵢ, ..., pₙ) du premier vecteur (V1) à partir de ladite grille tarifaire (q_{T1}, ..., q_{Tj}, ..., q_{Tm}) et la valeur des éléments ((LTL₁, ..., LTL₁, ..., LTLₙ), (HTL₁, ..., HTLⱼ, ..., HTLₙ)) des seconds vecteurs (V2L, V2H):
○ par une initialisation de la valeur des éléments des seconds vecteurs (V2L, V2H) lorsque la valeur de tous les éléments (p₁, ..., p_{i,} ..., pₙ) du premier vecteur (V1) est modifiée par rapport au cycle temporel précédent ou lors d'un premier cycle temporel (C1);
○ par une assignation de la valeur du i-1-ème élément (LTLᵢ₋₁, HTLᵢ₋₁) du second vecteur (V2L, V2H) au i-ème élément (LTLᵢ₋₁, HTLᵢ₋₁) du second vecteur (V2L, V2H) lorsque la valeur du i-ème élément (pᵢ) du premier vecteur (V1) est modifiée par rapport au cycle temporel qui précède ;
○ par une mise à jour de la valeur des éléments des seconds vecteurs (V2L, V2H) lorsque la valeur de tous les éléments (p₁, ..., pᵢ, ..., pₙ) du premier vecteur (V1) est inchangée par rapport au cycle temporel qui précède.

11. Dispositif de contrôle (GWY) selon la revendication 10, **caractérisé en ce qu'**il comporte en outre:
- un moyen (M4) pour évaluer à l'issue de chaque période temporelle (T₁, ..., Tᵢ, ..., Tₘ) un premier coût (CR_{T1}, ..., CR_{Tj}, ...,CR_{Tm}) de la fourniture par l'opérateur (PSO) pendant ladite période temporelle (T₁, ..., Tⱼ, ..., Tₘ) d'un niveau total (SP_{T1}, ..., SP_{Tj}, ..., SP_{Tm}) d'énergie égal à la somme du premier niveau d'énergie (PRL_{T1}, ..., PRL_{Tj}, ..., PRL_{Tm}) et du second niveau (PLL_{T1}, ..., PLL_{Tj}, ..., PLL_{Tm}) d'énergie;
- un moyen (M5) pour évaluer deux jeux de n seconds coûts ((CLF_{T1,1}, ..., CLF_{T1,i}, ..., CLF_{T1,n}), ..., (CLF_{Tj,1}, ..., CLF_{Tj,i}, ..., CLF_{Tj,n}), ... , (CLF_{Tm,1}, CLF_{Tm,j}, ..., CLF_{Tm,n}), (CHF_{T1,1,} ..., CHF_{T1,i}, CHF_{T1,n}), ..., (CHF_{Tj,1,} ..., CHF_{Tj,i}, ..., CHF_{Tj,n}), ..., (CHF_{Tm,1}, ..., CHF_{Tm,i}, ..., CHF_{Tm,n})) de la fourniture d'énergie par l'opérateur (PSO) au moyen de stockage d'énergie (PSD) pendant ladite période temporelle (T₁, ..., Tⱼ. ..., Tₘ) en considérant un niveau d'énergie fournie par l'opérateur (PSO) au dispositif client (DCL) pendant lesdites périodes temporelles (T₁, ..., Tⱼ, ..., Tₘ) égal au premier niveau (PRL_{T1}, ..., PRL_{Tj}, ..., PRL_{Tm}) d'énergie, ledit moyen (M5) simule un fonctionnement des moyens (M1, M2, M3) en considérant successivement 2n associations ((V1, V2LF2ᵢ, V2LF2ᵢ), (V1, V2HF2ᵢ, V2HF2ᵢ)) composées du premier vecteur (V1), et d'un second vecteur fictif (VLF2ᵢ, VHF2ᵢ) où le second vecteur fictif (VLF2ᵢ) comporte n éléments (LTL₁, ..., LTLᵢ+δ, ..., LTLₙ) et le second vecteur fictif (VLF2ᵢ) comporte n éléments (HTL₁, ..., HTLᵢ+δ, ..., HTLₙ), où δ est un nombre entier positif stocké dans le moyen (M2) ;
- un moyen (M6) pour sommer les m premiers coûts (CR_{T1}, ...CR_{Tj}, ...,CR_{Tm}) évalués à l'issue du cycle temporel pour obtenir un coût réel (SCR1) de fourniture d'énergie par l'opérateur (PSO) pendant ledit cycle temporel;
- un moyen (M7) pour sommer lesdits m seconds coûts ((CLF_{T1,1}, ..., CLF_{T1,i}, ..., CLF_{T1,n}), ..., (CLF_{Tj,1,} ..., CLF_{Tj,i}, ..., CLF_{Tj,n}), ..., (CLF_{Tm,1}, ..., CLF_{Tm,i}, ..., CLF_{Tm,n}). (CHF_{T1,1}, ..., CHF_{T1,i}, ..., CHF_{T1,n}), ..., (CHF_{Tj,1}, ..., CHF_{Tj,i}, ..., CHF_{Tj,n}), ..., (CHF_{Tm,1}, ..., CHF_{Tm,i}, ..., CHF_{Tm,n})) évalués à l'issue de chaque cycle temporel (C₁, C₂) pour obtenir au moins deux jeux de n coût fictifs ((SCLF₁, ..., SCLFᵢ, ..., SCLFₙ), (SCHF₁, ..., SCHFᵢ, ..., SCHFₙ)) de la fourniture d'énergie par l'opérateur (PSO) pendant ledit cycle temporel;
- un moyen (M8) pour comparer à l'issue du cycle temporel la valeur du coût réel (SCR1) et la valeur de chacun des coûts fictifs ((SCLF₁, ..., SCLFᵢ, ..., SCLFₙ), (SCHF₁, ..., SCHFᵢ, ..., SCHFₙ)) et délivrer des résultats ((RESL₁, ..., RESLᵢ, ..., RESLₙ), (RESH₁, ..., RESHᵢ, ..., RESHₙ)) desdites comparaisons.

12. Dispositif de contrôle (GWY) selon la revendication 11, **caractérisé en ce que** le moyen (M2) comporte en outre:
- un moyen pour recevoir lesdits résultats desdites comparaisons délivrés par le moyen (M8);
- un moyen pour ajouter la valeur δ à la valeur du i-ième élément du second vecteur (V2L, V2H)) stocké dans le moyen (M1) lorsque le résultat (RESLᵢ, RESHᵢ) établit que la valeur du coût fictif (SCLFᵢ, SCHFᵢ) est strictement inférieure à la valeur du coût réel (SCR1);
- un moyen pour retrancher la valeur δ à la valeur du i-ième élément du second vecteur (V2L, V2H) stocké dans le moyen (M1) lorsque le résultat (RESLᵢ, RESHᵢ) établit que la valeur du coût fictif (SCLFᵢ, SCHFᵢ) est strictement supérieure à la valeur du coût réel (SCR1).

13. Dispositif de contrôle (GWY) selon l'une des revendications 8 à 12, **caractérisé en ce que** le moyen (M3) comporte en outre :
- un moyen pour placer le dispositif (COM) dans un quatrième mode dans lequel l'opérateur (PSO) fournit de l'énergie uniquement au moyen de stockage d'énergie (PSD), lorsque le dispositif client (DCL) ne requiert pas d'énergie et tant que le niveau instantané (SEL) d'énergie est strictement inférieur au seuil local (QTL_{T1}, ..., QTL_{Tj}, ..., QTL_{Tm});
- un moyen pour placer le dispositif (COM) dans un cinquième mode dans lequel l'opérateur (PSO) ne fournit pas d'énergie au dispositif client (DCL) et au moyen de stockage d'énergie (PSD), lorsque le dispositif client (DCL) ne requiert pas d'énergie et lorsque le niveau instantané (SEL) d'énergie est supérieur ou égal au seuil local (QTL_{T1}, ..., QTL_{Tj}, ..., QTL_{Tm}).

14. Procédé de gestion de l'alimentation en énergie d'un dispositif client (DCL) connecté à un réseau local de transport d'énergie (DEN), le dispositif (DCL) pouvant requérir de l'énergie au travers un dispositif de commutation (COM) connecté audit réseau (DEN), un opérateur (PSO) fournissant de l'énergie audit réseau (DEN) au travers dudit dispositif (COM) suivant une grille tarifaire (q_{T1}, ..., q_{Tj}, ..., q_{Tm}), ladite grille tarifaire (q_{T1}, ..., q_{Tj}, ..., q_{Tm}) indiquant un prix d'énergie en fonction de l'heure de la fourniture de l'énergie par rapport à un nombre m de périodes temporelles successives (T₁, ..., Tⱼ, ..., Tₘ) formant un cycle temporel (C1, C2) où m est un nombre entier supérieur ou égal à 2, et où j est un nombre entier compris entre 1 et m, un moyen de stockage d'énergie (PSD) étant connectés audit réseau (DEN) au travers du dispositif (COM) configuré suivant un premier mode (MOD) dans lequel le moyen (PSD) fournit de l'énergie au dispositif (DCL) ou un deuxième mode (MOD) dans lequel l'opérateur (PSO) fournit de l'énergie simultanément au dispositif (DCL) et au moyen (PSD), ou un troisième mode (MOD) dans lequel l'opérateur (PSO) fournit de l'énergie exclusivement au dispositif (DCL), **caractérisé en ce que**, au niveau du dispositif de contrôle (GWY), il comporte les étapes consistant à :
- (S1) recevoir ladite grille tarifaire (q_{T1}, ..., q_{Tj}, ..., q_{Tm}) ;
- en permanence et en temps réel, recevoir du moyen de stockage d'énergie (PSD) un niveau instantané (SEL) d'énergie stockée dans ledit moyen (PSD);
- (S2.1) évaluer un nombre n d'éléments (p₁, ..., pᵢ, ..., pₙ) d'un premier vecteur (V1) à partir de ladite grille tarifaire (q_{T1}, ..., q_{Tj}, ..., q_{Tm}) et au démarrage de chaque cycle temporel déterminer n éléments ((LTL₁, ..., LTLᵢ, ..., LTLₙ), (HTL₁, ..., HTLᵢ, ..., HTLₙ)) de deux seconds vecteurs (V2L, V2H) associés aux n éléments (p₁, ..., pᵢ, ..., pₙ) du premier vecteur (V1);- (S2.2) déterminer un premier et un deuxième seuil courant (QLTL_{Tj}, QHTL_{Tj},) de charge pour ladite période courante (Tⱼ) à partir de la grille tarifaire (q_{T1}, ..., q_{Tj}, ..., q_{Tm}) et de l'association (V1, V2L, V2H)
- à chaque période temporelle (Tⱼ) ;
- (S3.1) Déterminer un niveau instantané (SEL_{INIT.Tj}) d'énergie au démarrage de la période temporelle (Tⱼ) ;
- (S3.2) déterminer un seuil local (QTL_{Tj}) à partir d'une comparaison entre le niveau instantané (SEL_{INIT,Tj}) d'énergie stockée dans le moyen de stockage (PSD) au démarrage de la période temporelle (Tⱼ) et le premier et deuxième seuil courant (QLTL_{Tj}, QHTL_{Tj}) de charge associé à la période temporelle (Tⱼ) ;
- (S3.3) en permanence et en temps réel, déterminer et assigner un mode de configuration (MOD) au dispositif de commutation (COM) de telle sorte que le niveau instantané (SEL) rallie le seuil local (QTL_{Tj}).

15. Procédé selon la revendication 14, **caractérisé en ce qu'**il comporte en outre des étapes visant à :
- (S4) évaluer le coût réel (SCR1) de la fourniture d'énergie par l'opérateur (PSO) pendant ledit cycle temporel couvrant lesdites périodes temporelles (T₁, ..., Tⱼ, ..., Tₘ) ;
- (S5) évaluer 2n coûts fictifs (SCR1) de la fourniture d'énergie par l'opérateur (PSO) pendant ledit cycle temporel couvrant lesdites périodes temporelles (T₁, ..., Tⱼ, ..., Tₘ) à partir d'une évaluation de deux jeux de n seconds coûts ((CLF_{T1,1}, ..., CLF_{T1,i} ..., CLF_{T1,n}), ..., (CLF_{Tj,1}, ..., CLF_{Tj,i}, ..., CLF_{Tj,n}), ..., (CLF_{Tm,1}, ..., CLF_{Tm,i}, ..., CLF_{Tm,n}), (CHF_{T1,1}, ..., CHF_{T1,i}, ..., CHF_{T1,n}), ..., (CHF_{Tj,1}, ..., CHF_{Tj,i}, ..., CHF_{Tj,n}), ... , (CHF_{Tm,1}, ..., CHF_{Tm,j}, ..., CHF_{Tm,n})) de la fourniture d'énergie par l'opérateur (PSO) au moyen de stockage d'énergie (PSD) pendant ladite période temporelle (T₁, ..., Tⱼ, ..., Tₘ) en considérant un niveau d'énergie fournie par l'opérateur (PSO) au dispositif client (DCL) pendant lesdites périodes temporelles (T₁...., Tⱼ, ..., Tₘ) égal au premier niveau (PRL_{T1}, ..., PRL_{Tj}, ..., PRL_{Tm}) d'énergie, en considérant successivement 2n associations ((V1, V2LF2ᵢ, V2LF2ᵢ), (V1, V2HF2ᵢ, V2HF2ᵢ)) composées du premier vecteur (V1) et d'un second vecteur fictif (VLF2ᵢ, VHF2ᵢ) où le second vecteur fictif (VLF2ᵢ) comporte n éléments (LTL₁, ..., LTLᵢ+δ, ..., LTLₙ) et le second vecteur fictif (VLF2ᵢ) comporte n éléments (HTL₁, ..., HTLᵢ+δ, ..., HTLₙ), où δ est un nombre entier positif stocké dans le dispositif de contrôle (GWY).
- (S6) comparer à l'issue du cycle temporel la valeur du coût réel (SCR1) et la valeur de chacun des coûts fictifs ((SCLF₁, ..., SCLFᵢ, ..., SCLFₙ), (SCHF₁, ..., SCHFᵢ, ..., SCHFₙ)) ;
- (S2.1) mettre à jour la valeur des éléments ((LTL₁, ..., LTLᵢ, ..., LTLₙ), (HTL₁, ..., HTLᵢ, ..., HTLₙ)) des seconds vecteurs (V2L, V2H) stockés dans le moyen de contrôle (GWY) en fonction des résultats ((RESL₁, ..., RESLᵢ, ..., RESLₙ), (RESH₁, ..., RESHᵢ, ..., RESHₙ)) desdites comparaisons.
